# EUROPEAN PATENT SPECIFICATION

(11) **EP 3 869 267 B1**
(45) Date of publication and mention of the grant of the patent: **15.01.2025**
(21) Application number: 19874503.6
(22) Date of filing: 16.10.2019
(51) Int. Cl.: G03B 35/24, G09G 3/20, G09G 3/36, H04N 13/312, H04N 13/373

(54) **IMAGE DISPLAY DEVICE AND IMAGE DISPLAY METHOD**
BILDANZEIGEVORRICHTUNG UND BILDANZEIGEVERFAHREN
DISPOSITIF D'AFFICHAGE D'IMAGE ET PROCÉDÉ D'AFFICHAGE D'IMAGE

(30) Priority: 16.10.2018 JP 2018194917
(43) Date of publication of application: 25.08.2021
(73) Proprietor: University of Tsukuba, Ibaraki 305-8577 (JP)
(72) Inventor: KAKEYA Hideki, Tsukuba-shi, Ibaraki 305-8577 (JP)
(74) Representative: Burger, Markus
(86) International application number: PCT/JP2019/040669
(87) International publication number: WO 2020/080403

(56) References cited:
- JP-A- 2005 092 103
- JP-A- 2013 015 619
- JP-A- 2015 125 407
- JP-A- 2016 218 453
- US-A1- 2013 300 957
- US-A1- 2018 149 877
- US-A1- 2018 192 038

## Description

### Technical Field

The present invention relates to an image display device and an image display method. The present application claims priority to JP 2018-194917 filed in Japan on October 16, 2018.

### Background Art

In recent years, research and development has been carried out on an image display device that enables a stereoscopic view of images without the use of eyeglasses. As such an image display device that enables a stereoscopic view of images without the use of eyeglasses, for example, a naked eye stereoscopic image display device of a parallax barrier type using time division is known (Patent Literature 1).

In the naked eye stereoscopic image display device described in Patent Literature 1, the right and left eyes of an observer who observes a predetermined sight direction are sequentially presented with a plurality of stereoscopic display images in predetermined order in time series with cycles of four or more.

Patent Literature 2 discloses a display unit including: a display section displaying an image; and a barrier section including a plurality of liquid crystal barriers, the light crystal barriers allowing light to pass therethrough and blocking the light, and extending in a first direction and being arranged side by side in a second direction orthogonal to the first direction. The barrier section includes a liquid crystal layer, first electrodes disposed in regions corresponding to the respective liquid crystal barriers, and a second electrode disposed between the first electrodes and the liquid crystal layer and disposed to face and be common to the first electrodes. The second electrode includes a plurality of slit array regions arranged side by side in the second direction, and each of the slit array regions includes a plurality of slits provided side by side, the slits in any one of the slit array regions extending in a same direction.

Patent Literature 3 discloses a 3D display device includes a display panel for displaying an image and a grating structure cooperating with the display panel to provide a 3D display effect. The grating structure includes a plurality of gratings capable of being switched between a transparent state and a nontransparent state. The 3D display device further includes: an eye tracking unit configured to acquire positions of eyes of a viewer; and a control unit connected to the eye tracking unit and configured to control the gratings to be switched between the transparent state and the nontransparent state in accordance with the positions of the eyes of the viewer, to enable a left eye of the viewer to view a first view displayed on the display panel through the grating structure and enable a right eye of the viewer to view a second view displayed on the display panel through the grating structure.

Patent Literature 4 discloses a reconfigurable parallax barrier panel comprising an electro-optic material has a first region, a second region and a first compensation region. First electrodes are addressable to define, in the first region of the panel, a parallax barrier array selected from a plurality of predetermined parallax barrier arrays, and second electrodes are addressable define, in the second region of the panel, independently of the first parallax barrier array, a parallax barrier array selected from the plurality of predetermined parallax barrier arrays. Electrodes of the first compensation region are addressable to define, dependent on the first parallax barrier array and on the second parallax barrier array, at least one slit and/or at least one barrier between the first region and the second region. Where the first electrodes are addressed to define a first one of the predetermined parallax barrier arrays in the first region and the second electrodes are addressed to define a second, different one of the predetermined parallax barrier arrays in the second region, the electrodes of the first compensation region may define the at least one slit and/or at least one barrier to at least partially obscure any line artefact at the transition between the first one of the predetermined parallax barrier arrays and the second one of the predetermined parallax barrier arrays.

### Citation List

### Patent Literature

Patent Literature 1: JP 2015-125407 A
Patent Literature 2: US 2013/300957 A1
Patent Literature 3: US 2018/149877 A1
Patent Literature 4: US 2018/192038 A1

### Summary of Invention

### Technical Problem

However, in the naked eye stereoscopic image display device described in Patent Literature 1, movement of the observer in a direction perpendicular to a screen display surface toward the screen display surface is not taken into consideration, and a stereoscopic viewing zone is narrow in the depth direction. The direction perpendicular to and toward the screen display surface is hereinafter referred to as the depth direction.

The present invention is made in the light of the circumstances described above, and provides an image display device and an image display method for extending the stereoscopic viewing zone in the depth direction.

### Solution to Problem

The present invention is made in order to solve the problem described above, and one aspect of the present invention is an image display device according to claim 1.

One aspect of the present invention is an image display method according to claim 5.

### Advantageous Effects of Invention

According to the present invention, the stereoscopic viewing zone can be extended in the depth direction.

### Brief Description of Drawings

FIG. 1 is a diagram illustrating an example of an image display system according to a first embodiment of the present invention.
FIG. 2 is a diagram illustrating an example of a stereoscopic view based on a parallax barrier method using time division when the number of divisions of time division is four according to the first embodiment of the present invention.
FIG. 3 is a diagram illustrating an example of a stereoscopic view based on a parallax barrier method using time division when the number of divisions of time division is five according to the first embodiment of the present invention.
FIG. 4 is a diagram illustrating an example of each of a state of a first display surface and a state of a second display surface when a barrier pattern is displayed in the second display surface at a certain timing according to the first embodiment of the present invention.
FIG. 5 is a diagram illustrating an example of each of a state of the first display surface and a state of the second display surface when the barrier pattern is displayed in the second display surface at a certain timing according to the first embodiment of the present invention.
FIG. 6 is a diagram illustrating an example of a functional configuration of a control device according to the first embodiment of the present invention.
FIG. 7 is a diagram illustrating an example of processing for displaying an image according to the first embodiment of the present invention.
FIG. 8 is a diagram illustrating an example of an image display system according to a second embodiment of the present invention.
FIG. 9 is a diagram illustrating an example of super multi-view display according to the second embodiment of the present invention.
FIG. 10 is a diagram illustrating an example of a display method of a super multi-view stereoscopic image of a parallax barrier type using time division according to the second embodiment of the present invention.
FIG. 11 is a diagram illustrating an example of propagation angles of light according to the second embodiment of the present invention.
FIG. 12 is a diagram illustrating a second example of the display method of the super multi-view stereoscopic image of a parallax barrier type using time division according to the second embodiment of the present invention.
FIG. 13 is a diagram illustrating a third example of the display method of the super multi-view stereoscopic image of a parallax barrier type using time division according to the second embodiment of the present invention.
FIG. 14 is a diagram illustrating a fourth example of the display method of the super multi-view stereoscopic image of a parallax barrier type using time division according to the second embodiment of the present invention.
FIG. 15 is a diagram illustrating a fifth example of the display method of the super multi-view stereoscopic image of a parallax barrier type using time division according to the second embodiment of the present invention.
FIG. 16 is a diagram illustrating a sixth example of the display method of the super multi-view stereoscopic image of a parallax barrier type using time division according to the second embodiment of the present invention.
FIG. 17 is a diagram illustrating an example of propagation angles of light according to a comparative example for the second embodiment of the present invention.

### Description of Embodiments

### First Embodiment

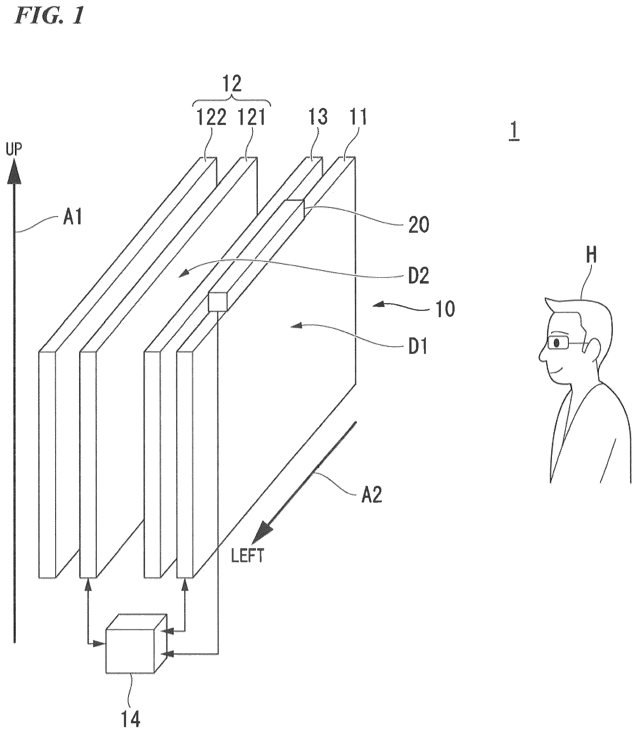

Embodiments of the present invention will be described below in detail with reference to the drawings. FIG. 1 is a diagram illustrating an example of an image display system 1 according to the present embodiment.

Note that, for the sake of convenience, the following description will be given on the assumption that a direction indicated by the arrow A1 illustrated in FIG. 1 is referred to as an up direction or up, a direction opposite to the up direction is a down direction or down, a direction indicated by the arrow A2 illustrated in FIG. 1, which is a direction perpendicular to the up direction, is a left direction or left, and a direction opposite to the left direction is a right direction or right.

The following will describe, as an example, a case in which the down direction matches the gravity direction, and the right-left direction matches the horizontal direction. Note that these directions are merely an example, and the down direction need not match the gravity direction.

The image display system 1 includes an image display device 10 and a distance detection unit 20.

The image display device 10 includes a first display unit 11, an irradiation unit 12, a diffusion plate 13, and a control device 14.

The first display unit 11 is a liquid crystal panel of a transmission type including a first display surface D1. In the first display surface D1, a plurality of first subpixels that display images are disposed in a matrix pattern. Here, the first subpixels are subpixels of the first display unit 11.

The subpixel is each one of partial pixels (in other words, n partial pixels arrayed in the right-left direction in each pixel), which are obtained by equally dividing each pixel that configures an image to be displayed in the image display system 1 into m (m is an integer of 2 or greater) along the up-down direction.

Note that the subpixel may be each one of partial pixels, which are obtained by equally dividing each pixel that configures an image to be displayed in the image display system 1 into m along a direction different from the up-down direction.

The present embodiment will describe a case in which each pixel that displays an image has the same size. The following will describe, as an example, a case in which each subpixel is a partial pixel obtained by equally dividing each pixel into three along the up-down direction. In other words, in the present embodiment, the width of one pixel matches the sum of the widths of three subpixels.

The first display unit 11 may be a liquid crystal panel that can display color images (in other words, a color liquid crystal panel), or may be a liquid crystal panel that can display only black and white images (in other words, a monochrome liquid crystal panel). The following will describe, as an example, a case in which the first display unit 11 is a color liquid crystal panel that can display color images with pixels of three colors, namely red, green, and blue. When the first display unit 11 is a color liquid crystal panel, each pixel of the first display unit 11 has three types of first subpixels such that a red first subpixel, a green first subpixel, and a blue first subpixel are disposed in order from the left direction (or the right direction).

Note that it is only necessary that the first display unit 11 include the first display surface D1 of a transmission type, and a display panel based on another display method may be adopted instead of the liquid crystal panel.

The irradiation unit 12 is an irradiation device that irradiates the first display surface D1 with light. Specifically, the irradiation unit 12 is an irradiation device that irradiates each of a plurality of first subpixels disposed in the first display surface D1 with light in response to a request from the control device 14.

The irradiation unit 12 includes a second display unit 121 and a light source unit 122.

The second display unit 121 is a liquid crystal panel of a transmission type including a second display surface D2. The second display surface D2 has second subpixels disposed in a matrix pattern. Here, the second subpixels are subpixels that function as a liquid crystal shutter, and have a transmission state in which white light radiated from the light source unit 122 is allowed to transmit, and a light-blocking state in which the white light is not allowed to transmit.

The following will describe, as an example, a case in which the pixel arrangement of the second display unit 121 has the same configuration as that of the first display unit 11.

Note that the following description will be given on the assumption that the second display unit 121 includes the second display surface D2 of a transmission type. However, this is not restrictive, and for example, the second display unit 121 may include a light-emitting display panel.

The light source unit 122 irradiates the second display surface D2 with light. Here, the light source unit 122 irradiates each of a plurality of second subpixels disposed in the second display surface D2 with white light. The light source unit 122 includes, for example, a light-emitting diode (LED), and functions as a backlight of the second display unit 121.

Note that a light source of another type may be used for the light source unit 122 instead of the LED.

Here, in the present embodiment, as described above, the pixel arrangement of the second display unit 121 has the same configuration as that of the first display unit 11.

In this example, the second display unit 121 has a pixel arrangement configuration similar to that of the first display unit 11, and is a color liquid crystal panel that can display color images with the pixels of three colors, namely red, green, and blue. Note that, when the first display unit 11 is a monochrome liquid crystal panel, the second display unit 121 is a monochrome liquid crystal panel that can display monochrome images.

In each pixel of the second display unit 121, three types of second subpixels according to a frequency band of light to be transmitted are disposed. Here, the second display surface D2 has three types of second subpixels such that a red second subpixel, a green second subpixel and a blue second subpixel are disposed in order from the left direction (or the right direction).

As described above, the second subpixels function as a liquid crystal shutter, and have a transmission state in which white light radiated from the light source unit 122 is allowed to transmit, and a light-blocking state in which the white light is not allowed to transmit. When white light is radiated to the second subpixels in the transmission state from the light source unit 122, a frequency component of a frequency band according to the type of transmission wavelength of the second subpixels out of frequency components of the radiated white light is transmitted. When white light is radiated to the red second subpixel, light of a red frequency band is transmitted through the second subpixel. When white light is radiated to the green second subpixel, green light is transmitted through the second subpixel. When white light is radiated to the blue second subpixel, blue light is transmitted through the second subpixel.

Light of any one of red, green, and blue that has been transmitted through the second subpixels of the second display surface D2 reaches the first display surface D1, and enters the first subpixels of the first display surface D1.

That is to say, the color of the light radiated from the light source unit 122 to the first subpixel through the second subpixel is any one of red, green, and blue.

As described above, there are a plurality of types of second subpixels disposed in the second display surface D2, according to the frequency band of illumination light radiated to the first display surface D1. There are as many types of the first subpixels disposed in the first display surface D1 as the number of the plurality of types of the second subpixels according to the frequency band of the illumination light radiated to the first display surface D1.

The second display surface D2 is a control surface that allows variable control of the arrangement of the illumination light radiated from the back surface of the first display surface D1 to the first display surface D1 with respect to the first display surface D1.

The diffusion plate 13 mixes light radiated from the light source unit 122 to the first display unit 11 through the second display unit 121, thereby converting the light into white light. The image display device 10 has the diffusion plate 13 disposed between the first display unit 11 and the second display unit 121.

Here, the first subpixels may absorb light radiated to the first subpixels by the light source unit 122 without transmitting the light, according to the type of red, green, or blue of the first subpixels. The diffusion plate 13 solves such a problem that the light radiated to the first subpixels is absorbed by the first subpixels without transmission.

Note that the image display device 10 need not include the diffusion plate 13. For example, when the second display unit 121 includes black and white subpixels as the second subpixels, the image display device 10 need not include the diffusion plate 13.

The control device 14 controls the overall image display device 10. The control device 14 displays an image on the first display surface D1, and also displays a barrier pattern on the second display surface D2.

Here, the barrier pattern is the arrangement of a plurality of slits and a barrier in a region of the second display surface D2. The slit is a region including the second subpixels in the transmission state that allows transmission of light out of the region of the second display surface D2. The barrier is a region including the second subpixels in the light-blocking state that does not allow transmission of light out of the region of the second display surface D2.

Here, in the first display unit 11, an image, such as a still image and a video, is displayed for each frame. In the first display unit 11, an image for the left eye and an image for the right eye are displayed in the same frame in different regions. The arrangement of the region of the image for the left eye and the region of the image for the right eye in the same frame is referred to as an image arrangement pattern.

The second display unit 121 determines positions at which the first display unit 11 is to be illuminated, and illuminates the first display unit 11, so that the image for the left eye to be displayed in the first display unit 11 is visually recognized by the left eye of an observer H and the image for the right eye to be displayed in the first display unit 11 is visually recognized by the right eye of the observer H. The arrangement of the positions at which the second display unit 121 illuminates the first display unit 11 is referred to as the barrier pattern.

More specifically, the control device 14 reads first image data, which is image data recorded in a recording medium such as a hard disk drive (HDD), a solid-state drive (SSD), a compact disc (CD), and a digital versatile disc (DVD). The first image data is image data of an image including parallax information. The first image data may be image data of a video, or may be image data of a still image.

The following will describe, as an example, a case in which the first image data is image data of a video. The control device 14 may generate the first image data, based on an operation received from a user, a program recorded in the recording medium, or the like.

The control device 14 generates left image data which is image data for the left eye of the observer H who observes the first display surface D1 and right image data which is image data for the right eye of the observer H for each frame of the first image data, based on the first image data read from the recording medium.

Note that each of the left image data and the right image data may be stored in the recording medium in advance, and the control device 14 may read each of the left image data and the right image data stored in the recording medium from the recording medium, instead of generating the left image data and the right image data based on the first image data.

The control device 14 stores in advance each of slit width information indicating a slit width which is a width of the slit described above, and slit inclination information indicating inclination of the slit. The following will describe, as an example, a case in which the slit width is represented by the number of subpixels as the unit of length of the width of the subpixel in the right-left direction.

Note that the slit width may be represented by another value instead of the number of subpixels. In the control device 14, some or all of the slit width information and the slit inclination information may be stored in advance.

### Determination of Image Arrangement Pattern

The control device 14 determines a pattern of the arrangement of the region of the image for the left eye and the region of the image for the right eye out of the image to be displayed in the first display unit 11, that is, the image arrangement pattern.

The control device 14 according to the present embodiment determines the image arrangement pattern, based on the number of divisions of time division indicated by time division number information to be described later, the slit width indicated by the slit width information, and the inclination of the slit indicated by the slit inclination information. Here, the number of patterns for the arrangement patterns of the slits (in other words, barrier patterns) is related to the number of divisions of time division. The number of patterns for the image arrangement patterns is related to the number of patterns for the barrier patterns. That is to say, the number of patterns for the image arrangement patterns is related to the number of divisions of time division. The control device 14 causes the first display surface D1 to display an image of the image arrangement patterns for which the number of patterns is related to the number of divisions of time division.

In the following, the number of divisions of time division is simply referred to as the number of divisions.

The control device 14 periodically changes the image arrangement patterns for which the number of patterns is more than one in an order determined in advance.

For example, when the number of divisions of time division is three, the control device 14 determines the image arrangement patterns for which three patterns are provided, namely patterns X1 to X3. The control device 14 periodically changes the image arrangement patterns according to patterns X1 to X3 in order of pattern X1, pattern X2, pattern X3, pattern X1, ..., for example, for each frame of the image to be displayed in the first display surface D1.

Here, a first image arrangement pattern according to a certain first pattern out of the image arrangement patterns which are arranged in the order determined in advance and for which the number of patterns is related to the number of divisions of time division is disposed to be shifted to the left by the slit width with respect to a second image arrangement pattern according to a pattern that comes next to the first image arrangement pattern according to the first pattern in the order.

In a case of this example, the image arrangement patterns are arranged along the time axis in order of pattern X1, pattern X2, pattern X3, pattern X1, .... In contiguous image arrangement patterns of these image arrangement patterns, the image is disposed at positions that are shifted from each other in the left (or right) direction by the slit width.

For example, when the number of divisions of time division is three, pattern X1 and pattern X2, pattern X2 and pattern X3, and pattern X3 and pattern X1 are each disposed to be shifted from each other by the slit width. Each pattern of the image arrangement pattern is an example of the arrangement pattern of the region of each of a left image region, which is a region out of the image display surface where the image of the left image data is displayed, and a right image region, which is a region out of the image display surface where the image of the right image data is displayed.

Here, when the control device 14 makes an image of a certain frame be displayed, the control device 14 causes the first display surface D1 to display, as the image of the frame, an image obtained by combining the image for the left eye and the image for the right eye into one image according to the image indicated by the left image data of the frame, the image indicated by the right image data of the frame, and the image arrangement pattern in the first display surface D1.

That is to say, the control device 14 controls the first subpixels, based on the left image data and the right image data.

In the first display surface D1 in which the one image is displayed, the left image region of the image arrangement pattern displays a part corresponding to the left image region out of the image indicated by the left image data of the frame. In the first display surface D1 in which the one image is displayed, the right image region of the image arrangement pattern displays a part corresponding to the right image region out of the image indicated by the right image data of the frame.

### Determination of Barrier Pattern

The control device 14 determines the barrier patterns different from each other for which the number of patterns is related to the number of divisions of time division, based on the number of divisions of time division indicated by the time division number information, the slit width indicated by the slit width information, and the inclination of the slit indicated by the slit inclination information. Here, the control device 14 calculates the number of divisions of time division, based on a distance detected by the distance detection unit 20. The distance detected by the distance detection unit 20 is a distance that indicates a relative positional relationship between the positions of the first display surface D1 and the observer H.

The barrier pattern is, as described above, the arrangement of the plurality of slits and the barrier in the region of the second display surface D2, where the slit is a region including the second subpixels in the transmission state and the barrier is a region including the second subpixels in the light-blocking state.

The control device 14 causes the barrier patterns for which the number of patterns according to the number of divisions of time division to be displayed in the second display surface D2. The control device 14 periodically changes the barrier patterns in an order determined in advance. For example, when the number of divisions of time division is three, the control device 14 determines the barrier patterns for which three patterns are provided, namely patterns Y1 to Y3. In this example, the position of the slits according to pattern Y1 is disposed at a position that is shifted with respect to the position of the slits according to pattern Y2 in the left by the slit width. The position of the slits according to pattern Y2 is disposed at a position that is shifted with respect to the position of the slits according to pattern Y3 in the left by the slit width.

The control device 14 periodically changes the barrier patterns according to patterns Y1 to Y3 in order of pattern Y1, pattern Y2, pattern Y3, pattern Y1, ..., for example, for each frame of the image to be displayed in the first display surface D1. In other words, the control device 14 synchronizes the periodic change of the image arrangement patterns in the first display surface D1 and the periodic change of the barrier patterns in the second display surface D2, for each frame of the image to be displayed in the first display surface D1.

As described above, the control device 14 displays, in the second display surface D2, the barrier pattern corresponding to the pattern of the image arrangement pattern of the image to be displayed in the first display surface D1. In the barrier pattern corresponding to a certain image arrangement pattern, in each slit of the barrier pattern, both of the left image region in the image arrangement pattern and the right image region in the image arrangement pattern are arranged in a disposition determined in advance.

The arrangement determined in advance is determined based on the positions of the eyes of the observer H, and for example, is a disposition such that the left half of a certain slit is the left image region and the right half of the slit is the right image region. The control device 14 can cause the image in the left image region disposed in the slit to be visually recognized only by the left eye of the observer H, and the image in the right image region disposed in the slit to be visually recognized only by the right eye of the observer H.

When the control device 14 displays the image of the image arrangement pattern corresponding to a certain frame in the first display surface D1 and displays the barrier pattern corresponding to the image arrangement pattern in the second display surface D2, the observer H observes only a part of the image that overlaps the slits. The control device 14 periodically changes the barrier pattern together with the image arrangement pattern.

As described above, in the barrier pattern, the positions of the slits of each pattern are different from each other by the slit width. Accordingly, for example, when the number of divisions of time division is three, by sequentially switching the barrier patterns of patterns Y1 to Y3, light is transmitted in the entire surface of the first display surface D1. When light is transmitted in the entire surface of the first display surface D1, the control device 14 can have the observer H visually recognize the entire image that is displayed in the first display surface D1.

As described above, the control device 14 controls the second subpixels, based on the image to be displayed in the first display surface D1 and a relative positional relationship between the position of the first display surface D1 and the position of the observer H who observes the first display surface D1.

According to the configuration as described above, in this example, the image display device 10 can have the observer H stereoscopically view the image that is displayed in the first display surface D1 based on the parallax barrier method using time division. That is to say, the image display device 10 displays a stereoscopic image based on the parallax barrier method using time division.

The distance detection unit 20 detects distance information. The distance information indicates an observer distance HD. The observer distance HD indicates, for example, a distance between a position according to both eyes of the observer H (for example, an intermediate position between the left eye and the right eye or the like) and the first display surface D1 in a direction perpendicular to the first display surface D1. That is to say, the distance information is information according to a relative position of the eyes of the observer H with respect to the first display surface D1.

The distance detection unit 20 outputs the detected distance information to the control device 14.

Note that the present embodiment describes a case in which, in the image display system 1, the image display device 10 and the distance detection unit 20 are separately provided from the image display device 10, but this is not restrictive. In the image display system 1, the image display device 10 and the distance detection unit 20 may be configured integrally with each other.

### Correspondence between Number of Divisions of Time Division and Observer Distance

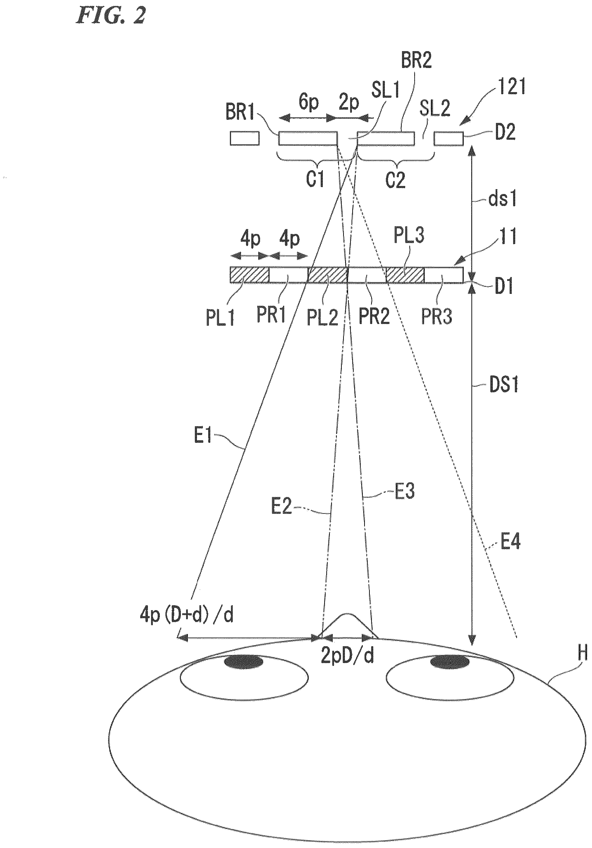

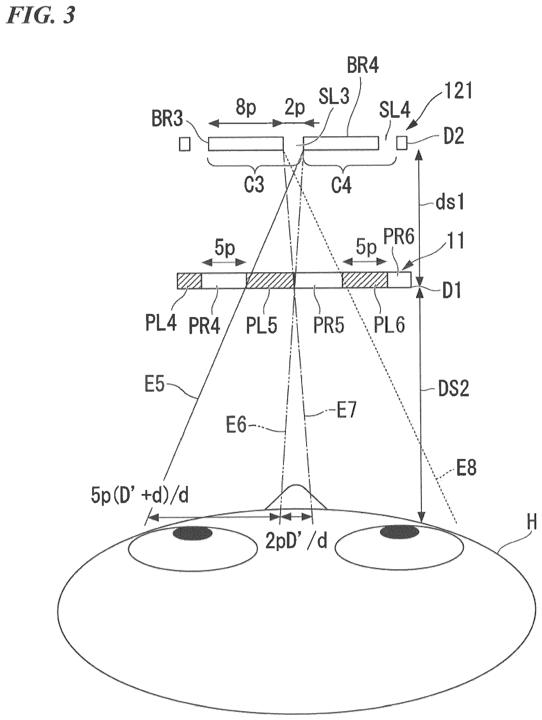

With reference to FIG. 2 and FIG. 3, description will be given of a configuration in which, in the image display system 1, the number of divisions of time division is changed according to the observer distance HD indicated by the distance information. In the image display system 1, the number of divisions of time division is relatively reduced when the observer distance HD indicated by the distance information is relatively long, and the number of divisions of time division is relatively increased when the observer distance HD indicated by the distance information is relatively short.

### Case in which Number of Divisions of Time Division is Four

FIG. 2 is a diagram illustrating an example of a stereoscopic view based on the parallax barrier method using time division when the number of divisions of time division is four according to the present embodiment. In the example illustrated in FIG. 2, the observer distance HD is referred to as a distance DS1.

In the example illustrated in FIG. 2, an inter-display surface distance DD, which is a distance between the second display surface D2 of the second display unit 121 and the first display surface D1 of the first display unit 11, is referred to as a distance ds1.

In the example illustrated in FIG. 2, as the barrier pattern when the number of divisions of time division in the second display surface D2 is four, a second display surface region C1 and a second display surface region C2 are illustrated. Each of the second display surface region C1 and the second display surface region C2 has a width of eight pixels.

The second display surface region C1 includes a barrier BR1 and a slit SL1. The slit SL1 has a width of two pixels in the second display surface D2. The position of the slit SL1 is periodically changed in the second display surface region C1.

The barrier BR1 is included in the rest of the region of the second display surface region C1 except for the slit SL1. The barrier BR1 has a width of six pixels in the second display surface D2. The barrier BR1 may be one continuous region or may be two discontinuous regions, according to the position of the slit SL1 in the second display surface region C1 at each time.

When the barrier BR1 is a continuous region, the slit SL1 is located at the end of the second display surface region C1. In contrast, when the barrier BR1 is discontinuous regions, the two regions of the barrier BR1 are respectively located at both the ends of the second display surface region C1, and the slit SL1 is interposed between the two regions of the barrier BR1 in the second display surface region C1.

The barrier BR2 is included in the rest of the region of the second display surface region C2 except for the slit SL2. The barrier BR2 has a width of six pixels in the second display surface D2. The barrier BR2 may be one continuous region or may be two discontinuous regions, according to the position of the slit SL2 in the second display surface region C2 at each time.

FIG. 2 illustrates the barrier pattern of the second display surface D2 and the image arrangement pattern (left image regions PL1 to PL3 and right image regions PR1 to PR3) of the first display surface D1 when the number of divisions of time division is four. Each of the left image regions PL1 to PL3 and the right image regions PR1 to PR3 has a width of four pixels in the first display surface D1.

Light that has been transmitted through the slit SL1 of the second display surface D2 enters the left image region PL2 of the first display surface D1, and is transmitted through the left image region PL2. The light (illustrated by the area between the line E1 and the line E3) that has been transmitted through the left image region PL2 enters the left eye of the observer H. The light that has been transmitted through the slit SL1 of the second display surface D2 enters the right image region PR2 of the first display surface D1, and is transmitted through the right image region PR2. The light (illustrated by the area between the line E2 and the line E4) that has been transmitted through the right image region PR2 enters the right eye of the observer H. The area between the line E2 and the line E3 is a region in which the right image and the left image are mixed.

A distance ΔL between the line E1 and the line E2 at the position according to both eyes of the observer H and a distance ΔR between the line E3 and the line E4 at the position according to both eyes of the observer H are expressed as 4p(D + d)/d, based on similarity of triangles. Here, p is a value of a pixel width pa, D is a value of the distance DS1, and d is a value of the distance ds1. A distance ΔEye between the line E2 and the line E3 at the position according to both eyes of the observer H is expressed as 2pD/d, based on similarity of triangles.

An interval between the left eye and the right eye of the observer H is larger than the distance ΔEye and is smaller than the sum of the distance ΔL, the distance ΔR, and the distance ΔEye, and therefore, in the example illustrated in FIG. 2, the stereoscopic view is made possible.

### Case in which Number of Divisions of Time Division is Five

FIG. 3 is a diagram illustrating an example of a stereoscopic view of the parallax barrier method using time division when the number of divisions of time division is five according to the present embodiment. In the example illustrated in FIG. 3, the observer distance HD is a distance DS2. Here, the distance DS2 is shorter than the distance DS1 illustrated in FIG. 2. The distance DS2 is shorter than the observer distance D. The number of divisions of time division in FIG. 2 described above is four. The number of divisions of time division in FIG. 3 is five.

That is to say, the number of divisions of time division is larger as the observer distance HD becomes shorter.

FIG. 3 illustrates the barrier pattern of the second display surface D2 and the image arrangement pattern of the first display surface D1 when the number of divisions of time division is five. The barrier pattern of this example includes a second display surface region C3 and a second display surface region C4. Each of the second display surface region C3 and the second display surface region C4 has a width of ten pixels.

In FIG. 3, the second display surface region C3 includes a barrier BR3 and a slit SL3. The slit SL3 has a width of two pixels in the second display surface D2. The position of the slit SL3 is periodically changed in the second display surface region C3.

The barrier BR3 is included in the rest of the region of the second display surface region C3 except for the slit SL3. The barrier BR3 has a width of six pixels in the second display surface D2. The barrier BR3 may be one continuous region or may be two discontinuous regions, according to the position of the slit SL3 in the second display surface region C3 at each time.

When the barrier BR3 is a continuous region, the slit SL3 is located at the end of the second display surface region C3. In contrast, when the barrier BR3 is discontinuous regions, the two regions of the barrier BR3 are respectively located at both the ends of the second display surface region C3, and the slit SL3 is interposed between the two regions of the barrier BR3 in the second display surface region C3.

The barrier BR4 is included in the rest of the region of the second display surface region C4 except for the slit SL4. The barrier BR4 has a width of six pixels in the second display surface D2. The barrier BR4 may be one continuous region or may be two discontinuous regions, according to the position of the slit SL4 in the second display surface region C4 at each time.

The example illustrated in FIG. 3 illustrates left image regions PL4 to PL6 and right image regions PR4 to PR6 as the barrier pattern when the number of divisions of time division in the second display surface D2 is five. Each of the left image regions PL4 to PL6 and the right image regions PR4 to PR6 has a width of five pixels in the first display surface D1.

In the example illustrated in FIG. 3, the left image region PL5 of the first display surface D1 is irradiated with light that has been transmitted through the slit SL3 of the second display surface D2. The radiated light that has been transmitted through the left image region PL5 enters the left eye of the observer H. The right image region PR5 of the first display surface D1 is irradiated with light that has been transmitted through the slit SL3 of the second display surface D2. The radiated light that has been transmitted through the right image region PR5 enters the right eye of the observer H.

A distance ΔL' between the line E5 and the line E6 at the position according to both eyes of the observer H and a distance ΔR' between the line E7 and the line E8 at the position according to both eyes of the observer H is expressed as 5p(D' + d)/d, based on similarity of triangles. Here, p is a value of a pixel width pa, D' is a value of the distance DS2, and d is a value of the distance ds1. A distance ΔEye' between the line E6 and the line E7 at the position according to both eyes of the observer H is expressed as 2pD'/d, based on similarity of triangles.

An interval between the left eye and the right eye of the observer H is larger than the distance ΔEye' and is smaller than the sum of the distance ΔL', the distance ΔR', and the distance ΔEye', and therefore, in the example illustrated in FIG. 3, the stereoscopic view is made possible.

Here, the width of each of the slit SL3 and the slit SL4 is two pixels in the second display surface D2, and is not changed from the width of the slit SL1 and the slit SL2 of FIG. 2.

In the image display system 1, the number of divisions of time division is changed without changing the width of the slits in the barrier pattern. In the image display system 1, by changing the number of divisions of time division without changing the width of the slits, the width of the barrier is changed according to the change of the number of divisions of time division. In the image display system 1, because the width of the barrier changes according to the change of the number of divisions of time division, intervals between the plurality of slits are changed according to the change of the number of divisions of time division.

Comparison between FIG. 2 and FIG. 3 shows that, for example, the interval between the slit SL1 and the slit SL2 of FIG. 2 is six pixels, which is the width of the barrier BR2, whereas the interval between the slit SL3 and the slit SL4 of FIG. 3 is eight pixels, which is the width of the barrier BR4. The interval between the slit SL3 and the slit SL4 of FIG. 3 is made larger than the interval between the slit SL1 and the slit SL2 of FIG. 2 due to the change of the number of divisions of time division from four to five.

According to the image display system 1 of the present embodiment, by changing the number of divisions of time division according to the observer distance HD and thereby changing the intervals between the plurality of slits, a viewing zone in which the observer H can implement a stereoscopic view can be changed according to the observer distance HD. Specifically, by making the intervals between the plurality of slits larger through the increase of the number of divisions of time division, the image display system 1 can generate the viewing zone in which the observer H can implement a stereoscopic view at a location that is relatively close to the image display device 10. By making the intervals between the plurality of slits smaller through the reduction of the number of divisions of time division, the image display system 1 can generate the viewing zone in which the observer H can implement a stereoscopic view at a relatively far location.

Note that, when the number of divisions of time division is changed from four to five, display luminance of the image to be displayed in the first display surface D1 is lowered. Even when the number of divisions of time division is changed, in order to maintain display luminance of the image to be displayed in the first display surface D1, the light source unit 122 may change intensity of light radiated to the second display surface D2 according to the number of divisions of time division. For example, when the number of divisions of time division is relatively increased, the light source unit 122 may relatively increase the intensity of the light radiated to the second display surface D2, whereas when the number of divisions of time division is relatively reduced, the light source unit 122 may relatively reduce the intensity of the light radiated to the second display surface D2.

Alternatively, even when the number of divisions of time division is changed, in order to maintain display luminance of the image to be displayed in the first display surface D1, the first display unit 11 may change display luminance of the image to be displayed in the first display surface D1 according to the number of divisions of time division. For example, the first display unit 11 may reduce, with the liquid crystal panel, display luminance of the image to be displayed in the first display surface D1 when the number of divisions of time division is relatively large. For example, when the number of divisions of time division is four, the first display unit 11 may reduce display luminance of the image with the liquid crystal panel, whereas when the number of divisions of time division is five, the first display unit 11 may cancel the reduction of the display luminance with the liquid crystal panel.

### <Barrier Pattern Displayed in Second Display Unit>

The following will describe each of a state of the first display surface D1 and a state of the second display surface D2 when a barrier pattern according to a certain pattern is displayed in the second display surface D2 of the second display unit 121.

The barrier pattern displayed in the second display surface D2 by the control device 14 is characterized by the number of divisions of time division, the slit width, and the inclination of the slit described above. The number of divisions of time division, the slit width, and the inclination of the slit may be hereinafter collectively referred to as a parameter set PS.

Here, each slit in the barrier pattern has a band-like shape. The slit width in the barrier pattern indicates the width of the slit having such a band-like shape. The inclination of each slit in the barrier pattern is an inclination represented by an angle θ between a tangent that touches all of a plurality of vertices (corners) formed on the left side of each slit and the up-down direction.

Note that the angle θ may be zero.

### <Specific Example 1 of Barrier Pattern Formed in Second Display Surface>

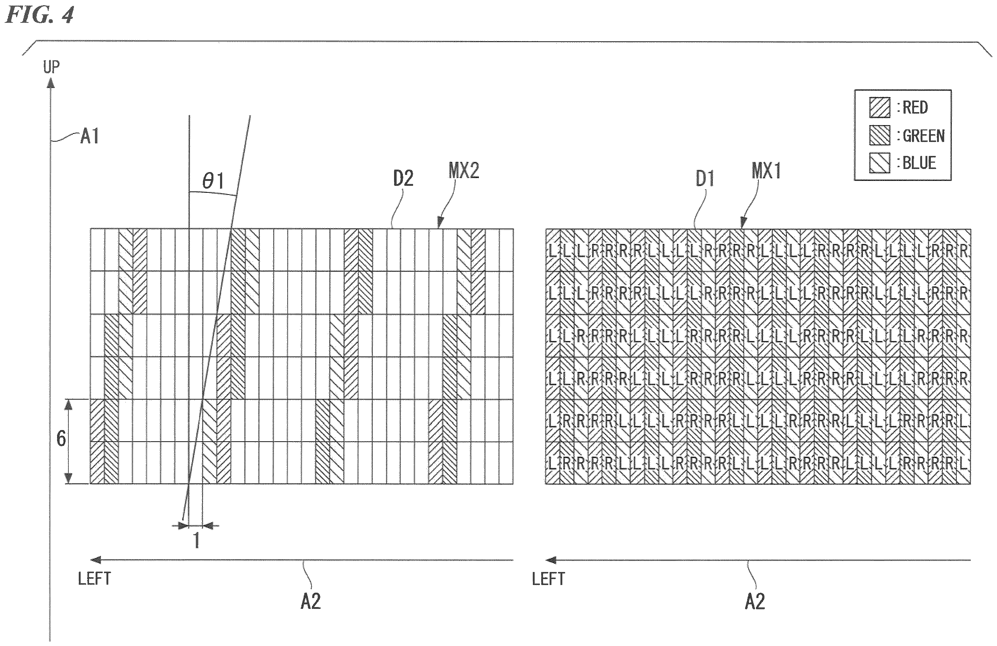

With reference to FIG. 4, the following will describe a barrier pattern P1, which is a barrier pattern displayed in the second display surface D2 by the control device 14 when the number of divisions of time division is four, the slit width in the barrier pattern is two subpixels, and the angle θ of the barrier pattern is tan-1(one subpixel/six subpixels), as an example of the barrier pattern displayed in the second display surface D2 based on the parameter set PS described above.

The description herein will describe a case in which each pixel of the second display surface D2 is a square pixel having an aspect ratio of 1:1, and each subpixel has an aspect ratio of 3: 1. Note that the aspect ratio of each pixel and the aspect ratio of each subpixel are not limited to these.

Note that the description herein will be given on the assumption that each of the first display surface D1 and the second display surface D2 is a so-called color liquid crystal panel each pixel of which includes red, green, and blue subpixels.

FIG. 4 is a diagram illustrating an example of each of a state of the first display surface D1 and a state of the second display surface D2 when a barrier pattern P1 is displayed in the second display surface D2 at a certain timing T1 according to the present embodiment. Each rectangle in the first display surface D1 represents each one of the plurality of first subpixels disposed in the first display surface D1. In other words, in the first display surface D1, the first subpixels are disposed in a matrix pattern.

Here, as described above, the first display surface D1 is a panel of a transmission type. Thus, the first subpixels are a plurality of display elements that are disposed in the first display surface D1 of a transmission type in a matrix pattern.

The region including the first subpixel denoted by "L" in the first display surface D1 represents the left image region described above. The region including the first subpixel denoted by "R" in the first display surface D1 represents the right image region described above.

When the number of divisions of time division is four, the slit width in the barrier pattern is two subpixels, and the angle θ of the barrier pattern is tan-1(one subpixel/six subpixels), at the timing T1, for example, the left image region and the right image region described above are disposed as illustrated by arrangement MX1. The arrangement MX1 is an example of the image arrangement pattern in the first display surface D1.

In the arrangement MX1, in the first display surface D1, the left image region including four continuously arrayed first subpixels and the right image region including four continuously arrayed first subpixels are periodically arrayed in the right-left direction for each row of the matrix formed by the first subpixels. In such a periodic array, there is a shift of one subpixel in the left in every two rows in the matrix.

In contrast, each rectangle in the second display surface D2 illustrated in FIG. 4 represents each one of the plurality of second subpixels disposed in the second display surface D2. In other words, as illustrated in FIG. 4, in the second display surface D2, the second subpixels are disposed in a matrix pattern. That is to say, the second subpixels are a plurality of illumination arrangement control elements that are disposed in the second display surface D2 in a matrix pattern.

Each of the second subpixels hatched in the second display surface D2 illustrated in FIG. 4 represents a second subpixel that allows transmission of light. Each of the second subpixels not hatched in the second display surface D2 illustrated in FIG. 4 represents a second subpixel in the light-blocking state.

When the number of divisions of time division is four, the slit width in the barrier pattern is two subpixels, and the angle θ of the barrier pattern is tan-1(one subpixel/six subpixels), at the timing T1, for example, the barrier pattern is as illustrated by arrangement MX2. The arrangement MX2 is an example of the barrier pattern displayed in the second display surface D2.

In the arrangement MX2, in the second display surface D2, a region in which two second subpixels that allow transmission of light are continuously arrayed and a region in which six second subpixels that do not allow transmission of light are continuously arrayed are periodically arrayed in the right-left direction for each row of the matrix formed by the second subpixels. In such a periodic array, there is a shift of one subpixel in the left in every two rows in the matrix.

In the example illustrated in FIG. 4, at the timing T1, from the perspective of the observer H, the left image region is disposed on the left half of each slit, and the right image region is disposed on the right half of each slit.

When the control device 14 periodically changes each of the image arrangement pattern in the first display surface D1 and the barrier pattern in the second display surface D2, the left image region is disposed on the left half of each slit and the right image region is disposed on the right half of each slit, so that the control device 14 can cause the image of the left image region disposed in each slit to be visually recognized only by the left eye of the observer H and the image of the right image region disposed in each slit to be visually recognized only by the right eye of the observer H.

In other words, the image display device 10 can display the stereoscopic image for the observer H with the parallax barrier method using quadruple time division when the slit width is two subpixels and the angle θ of the slit is tan-1(one subpixel/six subpixels).

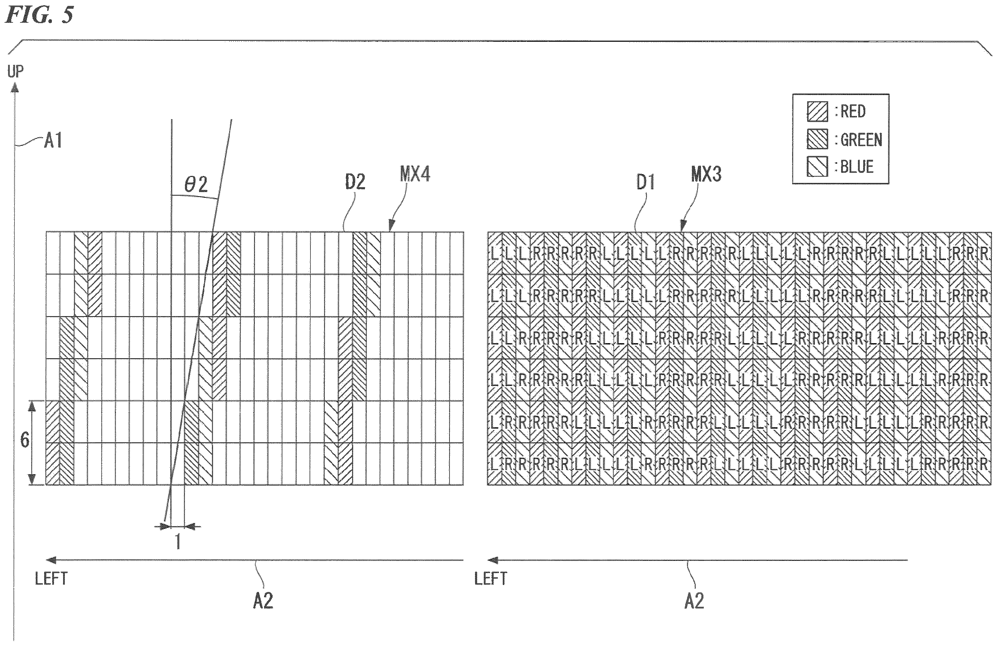

FIG. 5 is a diagram illustrating an example of each of a state of the first display surface D1 and a state of the second display surface D2 when a barrier pattern P2 is displayed in the second display surface D2 at a certain timing T2 according to the present embodiment.

When the number of divisions of time division is five, the slit width in the barrier pattern is two subpixels, and the angle θ of the barrier pattern is tan-1(one subpixel/six subpixels), at the timing T2, for example, the left image region and the right image region described above are disposed as illustrated by arrangement MX3. The arrangement MX3 is an example of the image arrangement pattern in the first display surface D1.

In the arrangement MX3, in the first display surface D1, the left image region including five continuously arrayed first subpixels and the right image region including five continuously arrayed first subpixels are periodically arrayed in the right-left direction for each row of the matrix formed by the first subpixels. In such a periodic array, there is a shift of one subpixel in the left in every two rows in the matrix.

In contrast, each rectangle in the second display surface D2 illustrated in FIG. 5 represents each one of the plurality of second subpixels disposed in the second display surface D2.

When the number of divisions of time division is five, the slit width in the barrier pattern is two subpixels, and the angle θ of the barrier pattern is tan-1(one subpixel/six subpixels), at the timingT2, for example, the barrier pattern is as illustrated by arrangement MX4. The arrangement MX4 is an example of the barrier pattern displayed in the second display surface D2.

In the arrangement MX4, in the second display surface D2, a region in which two second subpixels that allow transmission of light are continuously arrayed and a region in which eight second subpixels that do not allow transmission of light are continuously arrayed are periodically arrayed in the right-left direction for each row of the matrix formed by the second subpixels. In such a periodic array, there is a shift of one subpixel in the left in every two rows in the matrix.

The image display device 10 can display the stereoscopic image for the observer H based on the parallax barrier method using quintuple time division when the slit width is two subpixels and the angle θ of the slit is tan-1(one subpixel/six subpixels).

In the specific examples of the barrier pattern illustrated in FIG. 4 and FIG. 5, the slits are inclined with respect to the up direction (that is, the angle θ is not zero). Because the slits are inclined, in the image to be displayed in the first display surface D1, the image arrangement pattern is less noticeable than when the slits are not inclined.

Note that, in the barrier pattern, the slits need not be inclined with respect to the up direction (that is, the angle θ may be zero).

### <Functional Configuration of Control Device>

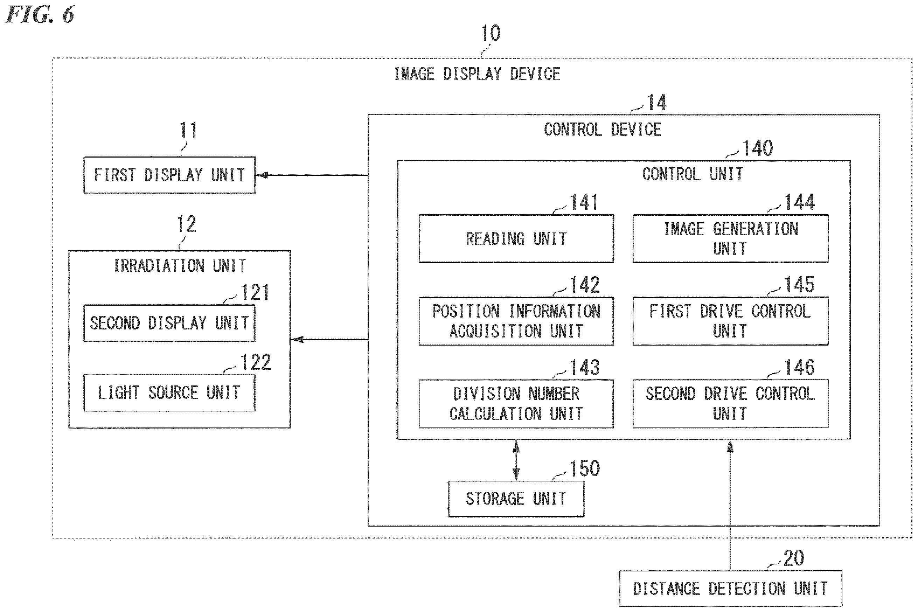

With reference to FIG. 6, the following will describe a functional configuration of the control device 14.

FIG. 6 is a diagram illustrating an example of a functional configuration of the control device 14 according to the present embodiment. The control device 14 includes a control unit 140 and a storage unit 150.

The control unit 140 controls the overall control device 14. The control unit 140 includes a reading unit 141, a position information acquisition unit 142, a division number calculation unit 143, an image generation unit 144, a first drive control unit 145, and a second drive control unit 146.

These functional units of the control unit 140 are, for example, implemented by a central processing unit (CPU) (not illustrated) executing various programs stored in the storage unit 150 to be described later. Some or all of the functional units may be a hardware functional unit such as an application-specific standard product (ASSP) and an application-specific integrated circuit (ASIC).

The reading unit 141 reads various pieces of information stored in the storage unit 150 in advance. The various pieces of information include the first image data and the parameter set PS.

The position information acquisition unit 142 acquires, from the distance detection unit 20, the distance information indicating the observer distance detected by the distance detection unit 20. That is to say, the position information acquisition unit 142 acquires the distance information indicating the observer distance HD, which is a distance between at least one eye of both eyes of the observer H and the first display surface D1.

The division number calculation unit 143 calculates the number of divisions of time division, based on the observer distance indicated by the distance information acquired by the position information acquisition unit 142.

The image generation unit 144 generates the left image data and the right image data, based on the first image data read by the reading unit 141 from the storage unit 150 and the calculated number of time division.

The first drive control unit 145 causes the first display surface D1 of the first display unit 11 to display an image. Here, the first drive control unit 145 displays an image, based on the parameter set PS and the left image data and the right image data that are generated by the image generation unit 144.

The second drive control unit 146 causes the second display surface D2 of the second display unit 121 to display a barrier pattern. Here, the second drive control unit 146 displays a barrier pattern, based on the parameter set PS.

### <Processing for Displaying Image>

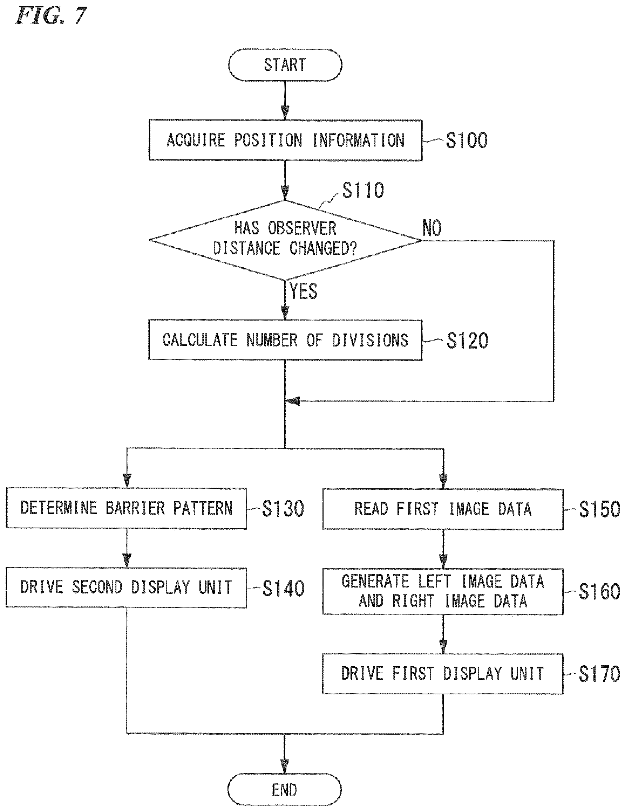

With reference to FIG. 7, description will be given of processing in which the control device 14 causes the second display surface D2 to display a barrier pattern and processing in which the control device 14 causes the first display surface to display an image.

FIG. 7 is a diagram illustrating an example of processing for displaying an image according to the present embodiment. Note that each of the processing of Steps S130 to S140 and each of the processing of Steps S150 to S170 are executed in parallel with each other synchronously for each frame.

Step S100: The position information acquisition unit 142 acquires the distance information from the distance detection unit 20.

Here, the distance information indicates the observer distance detected by the distance detection unit 20. The position information acquisition unit 142 supplies the acquired distance information to the division number calculation unit 143.

Step S 110: The division number calculation unit 143 determines whether or not the observer distance HD has changed. The division number calculation unit 143 compares the observer distance indicated by the distance information at the time of previous determination and the observer distance indicated by the distance information supplied from the position information acquisition unit 142. Here, the division number calculation unit 143 reads the distance information at the time of previous determination from the storage unit 150 via the reading unit 141.

If a difference between the observer distance indicated by the distance information read from the storage unit 150 and the observer distance indicated by the distance information supplied from the position information acquisition unit 142 is larger than a predetermined value, the division number calculation unit 143 determines that the observer distance HD has changed (Step S110: YES). If the division number calculation unit 143 determines that the observer distance HD has changed, the division number calculation unit 143 causes the storage unit 150 to store the distance information, which is acquired from the position information acquisition unit 142. Subsequently, the division number calculation unit 143 executes the processing of Step S120.

On the other hand, if the difference between the observer distance indicated by the distance information read from the storage unit 150 and the observer distance indicated by the distance information supplied from the position information acquisition unit 142 is not larger than the predetermined value, the division number calculation unit 143 determines that the observer distance HD has not changed (Step S110: NO). If the division number calculation unit 143 determines that the observer distance HD has not changed, the control unit 140 executes the processing of Step S130 and Step S150.

Step S120: The division number calculation unit 143 calculates the number of divisions of time division, based on the observer distance indicated by the distance information. Here, the number of divisions of time division calculated by the division number calculation unit 143 is an updated number of divisions of time division, which is an updated value of the number of divisions of time division.

The division number calculation unit 143 updates the value of the number of divisions of time division included in the parameter set PS with a calculated value of the updated number of divisions of time division.

Thus, the division number calculation unit 143 calculates the updated number of divisions of time division, which is an updated value of the number of divisions of time division, based on the observer distance HD indicated by the distance information acquired by the position information acquisition unit 142.

Here, the division number calculation unit 143 relatively reduces the updated number of divisions of time division when the observer distance HD is relatively long, and relatively increases the updated number of divisions of time division when the observer distance HD is relatively short.

Step S130: The second drive control unit 146 determines the barrier pattern to be displayed in the second display surface D2. Here, the second drive control unit 146 determines the barrier pattern, based on the parameter set PS stored in the storage unit 150.

Step S140: The second drive control unit 146 drives the second display unit 121, based on the barrier pattern determined in Step S130. Here, the second drive control unit 146 drives the second display unit 121 by displaying the barrier pattern determined in Step S130 in the second display surface D2.

That is to say, the second drive control unit 146 changes the barrier pattern of each of a region of a barrier region (barrier) out of the second display surface D2 where the illumination light is not generated and a slit region (slit) out of the second display surface D2 where the illumination light is generated, based on the updated number of divisions of time division calculated by the division number calculation unit 143, while maintaining the width of the slit region (slit) out of the second display surface D2 where the illumination light is generated to be the width before the number of divisions of time division is changed.

Step S150: The reading unit 141 reads, from the recording medium, the first image data stored in the recording medium. The first image data read by the reading unit 141 is, as described above, image data of the image including the parallax information. Here, the reading unit 141 reads the first image data stored in the recording medium from the recording medium incorporated in the control device 14, an information-reading device from the recording medium incorporated in the control device 14, an information-reading device externally attached to the control device 14, or the like.

The reading unit 141 supplies the read first image data to the image generation unit 144.

Step S160: The image generation unit 144 generates the left image data and the right image data, based on the first image data supplied from the reading unit 141. The image generation unit 144 supplies the generated left image data and right image data to the first drive control unit 145.

Step S170: The first drive control unit 145 drives the first display unit 11. Here, the first drive control unit 145 determines the image arrangement pattern, based on the parameter set PS stored in the storage unit 150. The first drive control unit 145 drives the first display unit 11 by displaying the image in the first display surface D1, based on the image arrangement pattern of the determined pattern and the left image data and the right image data supplied from the image generation unit 144.

That is to say, the second drive control unit 146 changes the number of divisions of time division in each region of the left image region out of the first display surface D1 where the image of the left image data is displayed and the right image region out of the first display surface D1 where the image of the right image data is displayed, based on the updated number of divisions calculated by the division number calculation unit 143.

Note that, in the processing illustrated in FIG. 7, the processing of Step S110 may be omitted. When the processing of Step S110 is omitted, the division number calculation unit 143 executes the processing of calculating the number of divisions of time division of Step S120, regardless of whether or not the observer distance HD has changed.

As described above, the image display device 10 according to the present embodiment is the image display device that displays the stereoscopic image based on the parallax barrier method using time division, and includes the plurality of display elements (first subpixels), the plurality of illumination arrangement control elements (second subpixels), and the control unit (control device 14).

The plurality of display elements (first subpixels) are disposed in the image display surface of a transmission type (first display unit 11) in a matrix pattern.

The plurality of illumination arrangement control elements (second subpixels) are disposed in a matrix pattern on the illumination arrangement surface (second display surface D2) that allows variable control of the arrangement of illumination light radiated from the back surface of the image display surface (first display unit 11) to the image display surface (first display unit 11) with respect to the image display surface (first display unit 11).

The control unit (control device 14) includes the position information acquisition unit 142, the division number calculation unit 143, the image display surface control unit (first drive control unit 145), and the illumination arrangement surface control unit (second drive control unit 146).

The position information acquisition unit 142 acquires the position information (distance information) indicating the observer distance HD which is a distance between at least one eye of both eyes of the observer H and the image display surface (first display unit 11).

The division number calculation unit 143 calculates the updated number of divisions of time division, which is an updated value of the number of divisions of time division, based on the observer distance HD indicated by the position information (distance information) acquired by the position information acquisition unit 142.

The image display surface control unit (first drive control unit 145) changes the number of divisions of time division in the region of each of the left image region out of the image display surface (first display unit 11) where the image of the image data for the left eye (left image data) is displayed and the right image region out of the image display surface (first display unit 11) where the image of the image data for the right eye (right image data) is displayed, based on the updated number of divisions of time division that is calculated by the division number calculation unit 143.

The illumination arrangement surface control unit (second drive control unit 146) changes the arrangement pattern (barrier pattern) in the region of each of the barrier region (barrier) out of the illumination arrangement surface (second display surface D2) where the illumination light is not generated and the slit region (slit) out of the illumination arrangement surface (second display surface D2) where the illumination light is generated, based on the updated number of divisions of time division that is calculated by the division number calculation unit 143, while maintaining the width of the slit region (slit) out of the illumination arrangement surface (second display surface D2) where the illumination light is generated to be the width before the number of divisions of time division is changed.

Owing to the configuration described above, in the image display device 10 according to the present embodiment, the interval between the slit regions (slits) can be changed according to the distance between at least one eye of both eyes of the observer H and the image display surface (first display unit 11), and therefore the stereoscopic viewing zone can be extended in the depth direction.

Here, in the image display device 10 according to the present embodiment, as compared to the conventional naked eye stereoscopic image display device as described in Patent Literature 1, a ratio of screen luminance with respect to power consumption can be increased, and thus there is an industrial advantage. In the image display device 10 according to the present embodiment, for example, as compared to the naked eye stereoscopic image display device described in Patent Literature 1, a ratio of screen luminance with respect to power consumption is increased by approximately four thirds in the unit of Lumen/Watt.

In the image display device 10 according to the present embodiment, the width of the slit regions (slits) is not changed from the width before the number of divisions of time division is changed, and therefore, for example, flickering of images in the image display surface can be prevented from being noticeable as compared to a case in which the width of the slit regions is increased in order to extend the viewing zone in the depth direction. Therefore, in the image display device 10 according to the present embodiment, the stereoscopic viewing zone can be extended in the depth direction without deteriorating image quality.

In the image display device 10 according to the present embodiment, the division number calculation unit 143 relatively reduces the updated number of divisions of time division when the observer distance HD is relatively long, and relatively increases the updated number of divisions of time division when the observer distance HD is relatively short.

Owing to the configuration described above, in the image display device 10 according to the present embodiment, according to the observer distance HD, the updated number of divisions of time division can be changed to a value appropriate for extending the stereoscopic viewing zone in the depth direction.

### Second Embodiment

The second embodiment of the present invention will be described below in detail with reference to the drawings.

The first embodiment has described a case in which the image display device displays a naked eye stereoscopic image of a parallax barrier type using time division. The present embodiment will describe a case in which the image display device displays a super multi-view stereoscopic image of a parallax barrier type using time division.

The image display system according to the present embodiment is referred to as an image display system 1a, and the image display device according to the present embodiment is referred to as an image display device 10a.

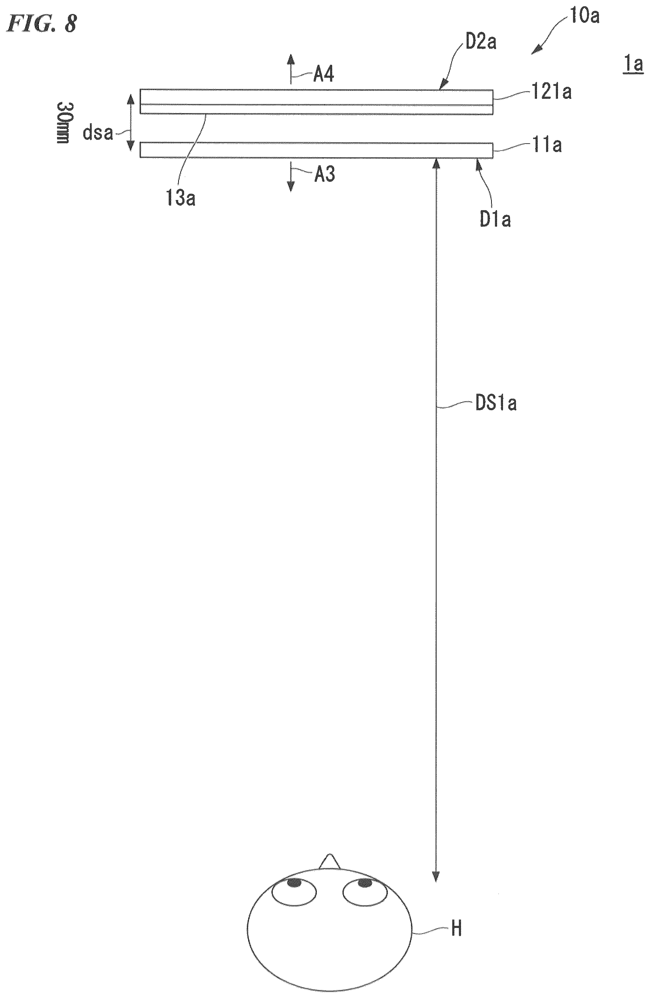

FIG. 8 is a diagram illustrating an example of the image display system 1a according to the present embodiment. The image display system 1a includes an image display device 10a and a distance detection unit 20 (not illustrated).

The image display device 10a includes a first display unit 11a, an irradiation unit 12a, a diffusion plate 13a, and a control device 14 (not illustrated).

Here, the functions of the control device 14 (not illustrated) and the distance detection unit 20 (not illustrated) are the same as those of the first embodiment. Description of the same functions as those of the first embodiment is omitted, and differences from the first embodiment will mainly be described in the second embodiment.

The first display unit 11a is a liquid crystal panel of a transmission type including a first display surface D1a. A second display unit 121a is a liquid crystal panel of a transmission type including a second display surface D2a. The first display surface D1a faces a direction indicated by the arrow A3, and the second display surface D2a faces a direction indicated by the arrow A4. Here, the arrow A3 and the arrow A4 indicate directions opposite to each other. In the image display device 10a, the first display unit 11a and the second display unit 121a are provided to face directions opposite to each other.

That is to say, the order in which the plurality of types of second pixels are disposed in the second display surface D2a and the order in which the same number of types of the first pixels as the plurality of types are disposed in the first display surface D1a are reverse orders when the back surface of the first display surface D1a is seen from the second display surface D2a.

Due to the configuration in which the first display unit 11a and the second display unit 121a are provided to face directions opposite to each other, propagation angles at which light of three colors, namely red, green, and blue, is transmitted through the first display unit 11a are different from each other. As will be described later, red light, green light, and blue light constituting the light of three colors are transmitted through the first display unit 11a, and propagate at angles different from each other.

The width of the subpixel of the first display unit 11a and the width of the subpixel of the second display unit 121a are both the pixel width pa. The pixel width pa is, as an example, 0.092 millimeters.

In the image display device 10a, an inter-display surface distance DDa, which is a distance between the first display unit 11a and the second display unit 121a, is a distance dsa. The distance dsa is longer than the distance ds, which is the inter-display surface distance DD of the image display device 10 of FIG. 2. The distance dsa is, as an example, 30 millimeters.

An observer distance HDa, which is a distance between the first display surface D1a and the observer H, is a distance DS1a. The distance DS1a is, as an example, approximately 750 millimeters.

Once the distance dsa, the observer distance HDa, and the pixel width pa are determined, a single-perspective viewing width WVZ, which is a width of a viewing zone from a single perspective of the observer H, is calculated based on similarity of triangles. In the present embodiment, the calculated single-perspective viewing width WVZ is approximately 2.3 millimeters.

The single-perspective viewing width WVZ is calculated based on similarity of triangles once the distance dsa, the observer distance HDa, and the pixel width pa are determined. Hence, similarly, based on similarity of triangles, the inter-display surface distance DDa is determined based on the observer distance HDa, the pixel width pa, and the single-perspective viewing width WVZ. That is to say, the inter-display surface distance DDa is a distance that is based on the observer distance HDa, the pixel width pa, and the single-perspective viewing width WVZ. Here, because the viewing angle of the first display surface D1a is determined based on the observer distance HDa and the single-perspective viewing width WVZ, the inter-display surface distance DDa is a distance based on the viewing angle of the first display surface D1a and the pixel width pa.

That is to say, the inter-display surface distance DDa between the first display surface D1a and the second display surface D2a is a distance that is based on the viewing angle of the first display surface D1a and the pixel width pa of the second pixel disposed in the second display surface D2a.

The diffusion plate 13a is a diffusion plate. The diffusion plate 13a prevents the occurrence of moiré by slightly widening the subpixels of each color constituting the barrier pattern of the second display surface D2a. Under the condition in which there is no occurrence of moiré, the diffusion plate 13a need not be provided.

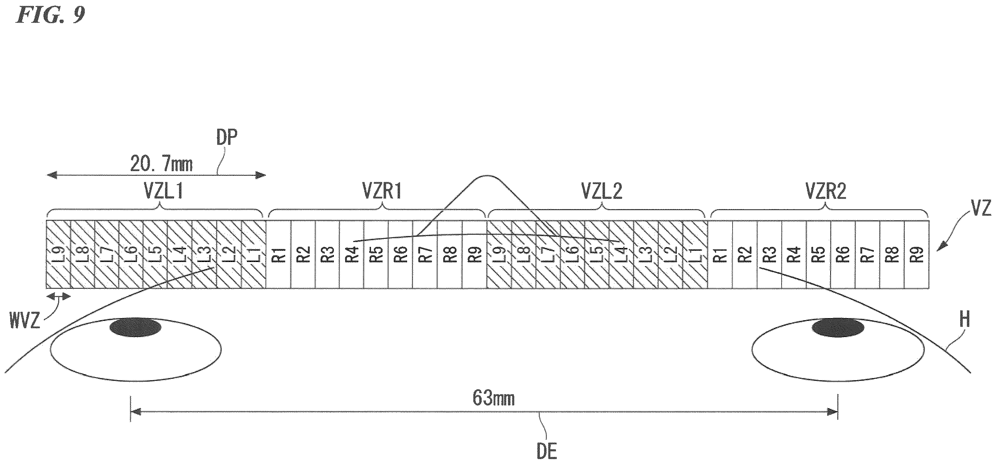

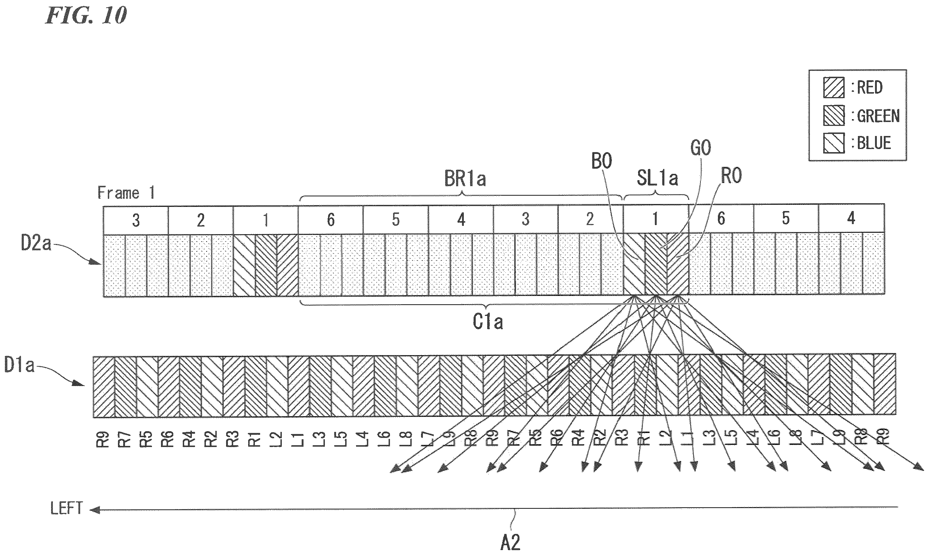

Here, with reference to FIG. 9 and FIG. 10, description will be given of display of the super multi-view stereoscopic image of a parallax barrier type using time division.

FIG. 9 is a diagram illustrating an example of super multi-view display according to the present embodiment. A viewing zone VZ is a viewing zone of the observer H.

The viewing zone VZ includes a first left viewing zone VZL1, a first right viewing zone VZR1, a first left viewing zone VZL2, and a first right viewing zone VZR2. Each of the first left viewing zone VZL1 and the first left viewing zone VZL2 includes nine viewing zones corresponding to one perspective of the left eye of the observer H. Each of the first right viewing zone VZR1 and the first right viewing zone VZR2 includes nine viewing zones corresponding to one perspective of the right eye of the observer H.

That is to say, in the super multi-view display according to the present embodiment, images each for nine perspectives are presented around each of the right eye and the left eye of the observer H.

The width of each of the first left viewing zone VZL1, the first right viewing zone VZR1, the first left viewing zone VZL2, and the first right viewing zone VZR2 is a viewing width DP. The viewing width DP is, as an example, 20.7 millimeters.

An interval between both eyes of the observer H is an eye interval DE. The eye interval DE is, as an example, 63 millimeters. The diameter of the pupil of each of the left eye and the right eye of the observer H is, as an example, 4 millimeters. In the super multi-view display according to the present embodiment, at least two rays of light that are transmitted through the first subpixels of the first display surface D1a are caused to enter the pupil of each of the left eye and the right eye of the observer H.

FIG. 10 is a diagram illustrating an example of a display method of the super multi-view stereoscopic image of a parallax barrier type using time division according to the present embodiment. As described above, in the super multi-view display according to the present embodiment, images each for nine perspectives are presented around each of the right eye and the left eye of the observer H.

In the image display device 10, the number of divisions of time division is six. The second display surface D2 includes a second display surface region C1a. The second display surface region C1a includes a barrier BR1a and a slit SL1a adjacent to each other in the mentioned order from the left direction. The barrier BR1a has a width of fifteen pixels.

The slit SL1a has a width of three pixels.

The slit SL1a includes a blue second subpixel B0, a green second subpixel G0, and a red second subpixel R0. The blue second subpixel B0, the green second subpixel G0, and the red second subpixel R0 are arrayed in the mentioned order from the left direction in the slit SL1.

Blue light that has been transmitted through the blue second subpixel B0 is transmitted through the first subpixel that corresponds to the color blue of the first display surface D1a. Green light that has been transmitted through the green second subpixel G0 is transmitted through the first subpixel that corresponds to the color green of the first display surface D1a. Red light that has been transmitted through the red second subpixel R0 is transmitted through the first subpixel that corresponds to the color red of the first display surface D1a.

Here, as described above, the first display surface D1a and the second display surface D2a are provided to face directions opposite to each other. Because the first display surface D1a and the second display surface D2a are provided to face directions opposite to each other, in the image display device 10a, beams of light of different colors transmitting through the first display surface D1a propagate at angles different from each other.

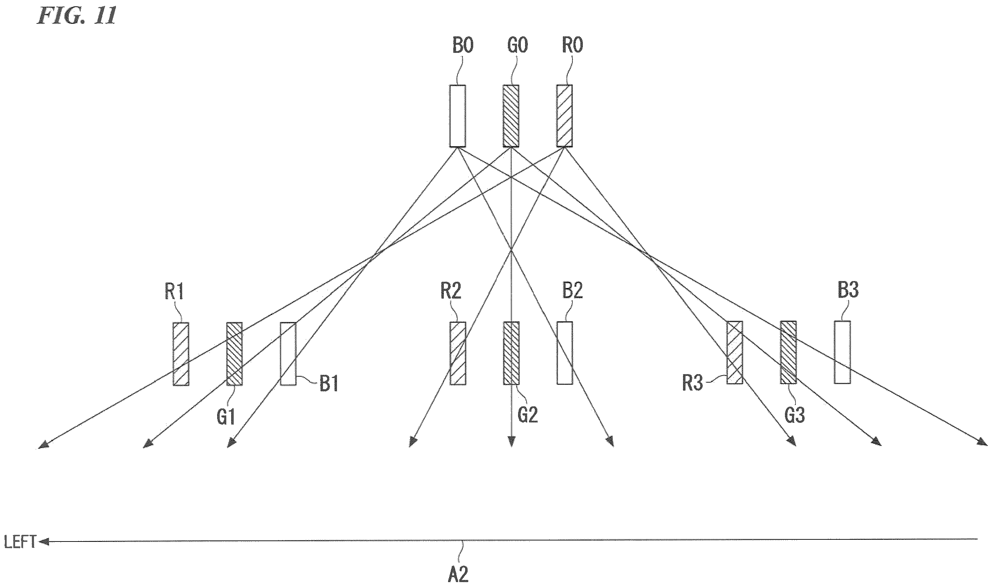

Here, with reference to FIG. 11, description will be given of the propagation angles of light transmitting through the first display surface D1a.

FIG. 11 is a diagram illustrating an example of the propagation angles of light according to the present embodiment. Here, the propagation angle of light is an angle between a direction in which the light propagates and a direction that is perpendicular to the direction indicated by the arrow A2 in the drawing sheet. The blue second subpixel B0, the green second subpixel G0, and the red second subpixel R0 are arrayed adjacently to each other in the mentioned order from the left direction in the second display surface D2a.

A red first subpixel R1, a green first subpixel G1, and a blue first subpixel B1 are arrayed adjacently to each other in the mentioned order from the left direction in the first display surface D1a. A red first subpixel R2, a green first subpixel G2, and a blue first subpixel B2 are arrayed adjacently to each other in the mentioned order from the left direction in the first display surface D1a. A red first subpixel R3, a green first subpixel G3, and a blue first subpixel B3 are arrayed adjacently to each other in the mentioned order from the left direction in the first display surface D1a.

Blue light that has been transmitted through the blue second subpixel B0 is radiated to each of the blue first subpixels B1 to B3. Green light that has been transmitted through the green second subpixel G0 is radiated to each of the green first subpixels G1 to G3. Red light that has been transmitted through the red second subpixel R0 is radiated to each of the red first subpixels R1 to R3.

The propagation angle of the red light transmitting through the red first subpixel R1, the propagation angle of the green light transmitting through the green first subpixel G1, and the propagation angle of the blue light transmitting through the blue first subpixel B1 are different from each other. The propagation angle of the red light transmitting through the red first subpixel R2, the propagation angle of the green light transmitting through the green first subpixel G2, and the propagation angle of the blue light transmitting through the blue first subpixel B2 are different from each other. The propagation angle of the red light transmitting through the red first subpixel R3, the propagation angle of the green light transmitting through the green first subpixel G3, and the propagation angle of the blue light transmitting through the blue first subpixel B3 are different from each other.

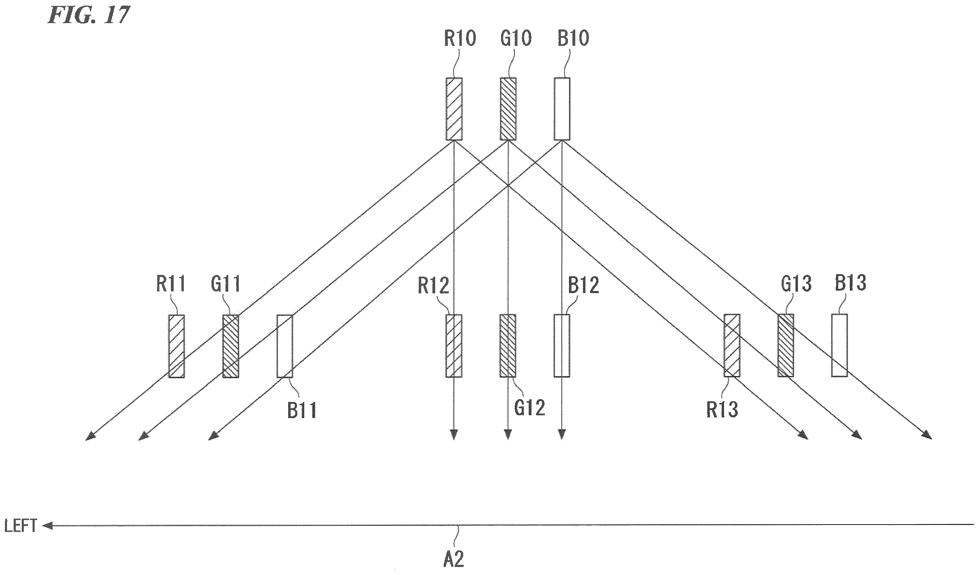

Here, with reference to FIG. 17, for the sake of comparison, description will be given of propagation angles of light transmitting through a first display surface D10 (not illustrated) when the first display surface D10 and a second display surface D20 (not illustrated) are provided to face the same direction as each other according to a comparative example.

FIG. 17 is a diagram illustrating an example of the propagation angles of light according to the comparative example for the present embodiment. A red second subpixel R10, a green second subpixel G10, and a blue second subpixel B10 are arrayed adjacently to each other in the mentioned order from the left direction in the second display surface D20 according to the comparative example.

A red first subpixel R11, a green first subpixel G11, and a blue first subpixel B11 are arrayed adjacently to each other in the mentioned order from the left direction in the first display surface D10 according to the comparative example. A red first subpixel R12, a green first subpixel G12, and a blue first subpixel B12 are arrayed adjacently to each other in the mentioned order from the left direction in the first display surface D10. A red first subpixel R13, a green first subpixel G13, and a blue first subpixel B13 are arrayed adjacently to each other in the mentioned order from the left direction in the first display surface D10.

Blue light that has been transmitted through the blue second subpixel B10 is radiated to each of the blue first subpixels B11 to B13. Green light that has been transmitted through the green second subpixel G10 is radiated to each of the green first subpixels G11 to G13. Red light that has been transmitted through the red second subpixel R10 is radiated to each of the red first subpixels R11 to R13.

The propagation angle of the red light transmitting through the red first subpixel R11, the propagation angle of the green light transmitting through the green first subpixel G11, and the propagation angle of the blue light transmitting through the blue first subpixel B11 are the same as each other. The propagation angle of the red light transmitting through the red first subpixel R12, the propagation angle of the green light transmitting through the green first subpixel G12, and the propagation angle of the blue light transmitting through the blue first subpixel B12 are the same as each other. The propagation angle of the red light transmitting through the red first subpixel R13, the propagation angle of the green light transmitting through the green first subpixel G13, and the propagation angle of the blue light transmitting through the blue first subpixel B13 are the same as each other.

The propagation angles of the light transmitting through each of a set of subpixels (for example, the red first subpixel R1, the green first subpixel G1, and the blue first subpixel B1) illustrated in FIG. 11 are different from each other, whereas the propagation angles of the light transmitting through each of a set of subpixels (for example, the red first subpixel R11, the green first subpixel G11, and the blue first subpixel B11) illustrated in FIG. 17 are the same as each other. That is to say, the propagation angles of the light transmitting through the first display surface D1a are different between the case in which the first display surface D1a and the second display surface D2a are provided to face directions opposite to each other and the case in which the first display surface D1a and the second display surface D2a are provided to face the same direction as each other.

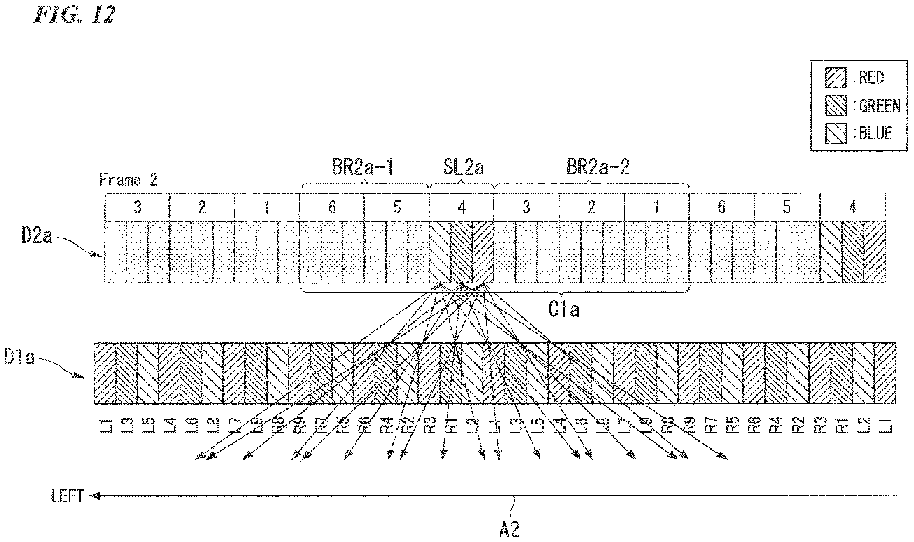

Next, with reference to FIG. 12 to FIG. 16, description will be given of periodic change of the barrier patterns in the second display surface D2a. The barrier patterns in the second display surface D2a are periodically changed from the barrier pattern illustrated in FIG. 10 to the barrier pattern illustrated in each of FIG. 12 to FIG. 16 in the mentioned order.

FIG. 12 is a diagram illustrating a second example of the display method of the super multi-view stereoscopic image of a parallax barrier type using time division according to the present embodiment. The second display surface region C1a includes a barrier BR2a-1, a slit SL2a, and a barrier BR2a-2 adjacent to each other in the mentioned order from the left direction. The barrier BR2a-1 has a width of six pixels. The slit SL2a has a width of three pixels. The barrier BR2a-2 has a width of nine pixels.

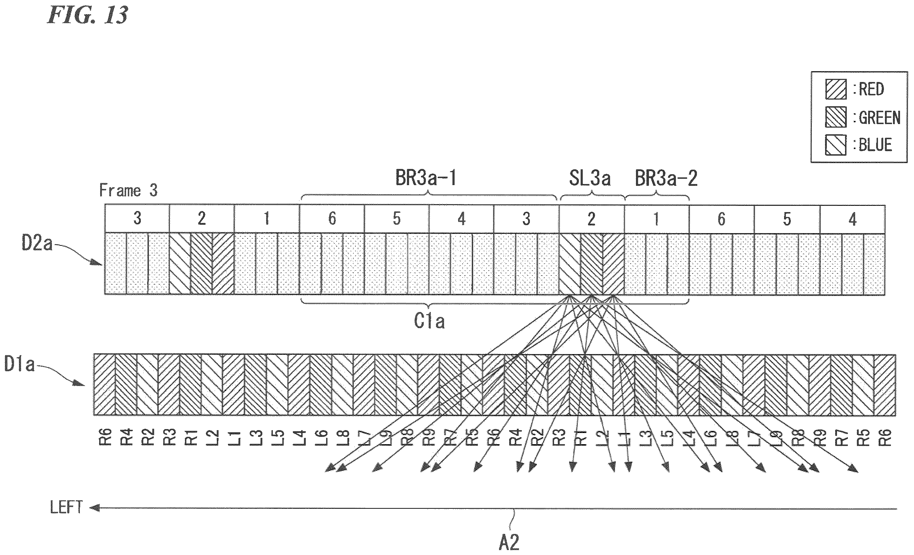

FIG. 13 is a diagram illustrating a third example of the display method of the super multi-view stereoscopic image of a parallax barrier type using time division according to the present embodiment. The second display surface region C1a includes a barrier BR3a-1, a slit SL3a, and a barrier BR3a-2 adjacent to each other in the mentioned order from the left direction. The barrier BR3a-1 has a width of twelve pixels. The slit SL3a has a width of three pixels. The barrier BR3a-2 has a width of three pixels.

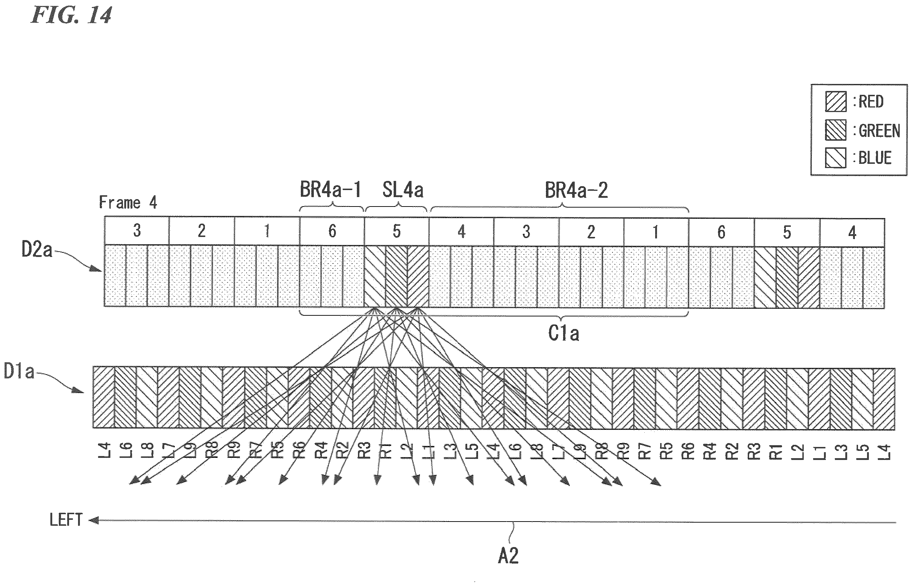

FIG. 14 is a diagram illustrating a fourth example of the display method of the super multi-view stereoscopic image of a parallax barrier type using time division according to the present embodiment. The second display surface region C1a includes a barrier BR4a-1, a slit SL4a, and a barrier BR4a-2 adjacent to each other in the mentioned order from the left direction. The barrier BR4a-1 has a width of three pixels. The slit SL4a has a width of three pixels. The barrier BR4a-2 has a width of twelve pixels.

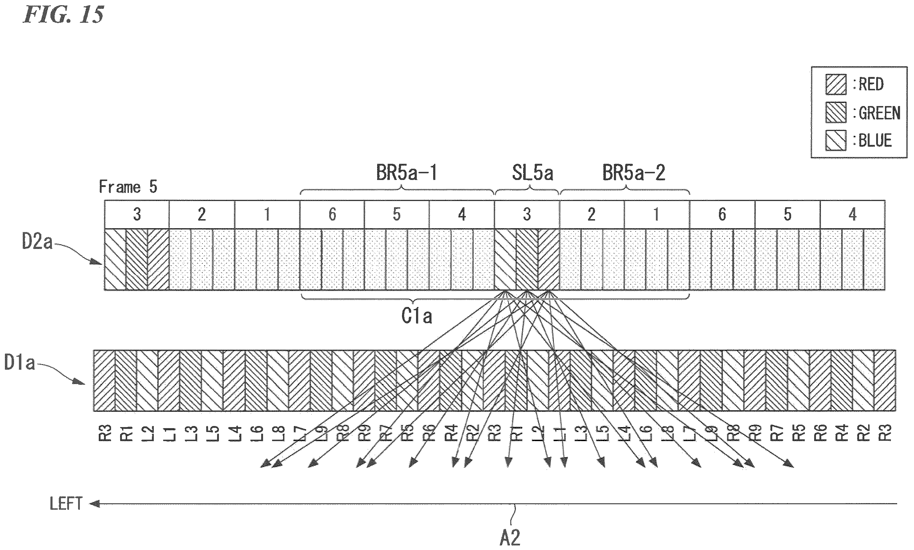

FIG. 15 is a diagram illustrating a fifth example of the display method of the super multi-view stereoscopic image of a parallax barrier type using time division according to the present embodiment. The second display surface region C1a includes a barrier BRSa-1, a slit SL5a, and a barrier BR5a-2 adjacent to each other in the mentioned order from the left direction. The barrier BRSa-1 has a width of nine pixels. The slit SL5a has a width of three pixels. The barrier BR5a-2 has a width of six pixels.

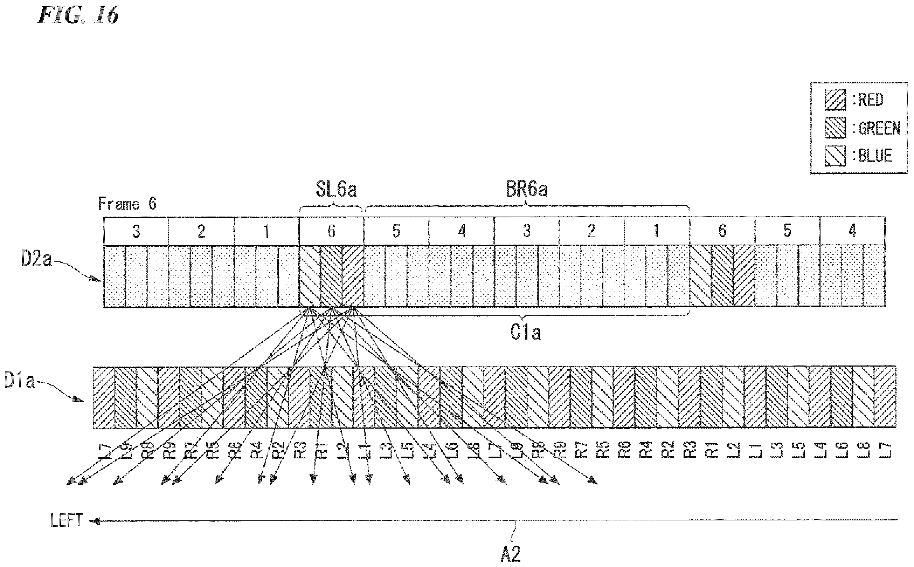

FIG. 16 is a diagram illustrating a sixth example of the display method of the super multi-view stereoscopic image of a parallax barrier type using time division according to the present embodiment. The second display surface region C1a includes a slit SL6a and a barrier BR6a adjacent to each other in the mentioned order from the left direction. The barrier BR6a has a width of fifteen pixels. The slit SL6a has a width of three pixels.

Note that the present embodiment has described the display method of the super multi-view stereoscopic image of a parallax barrier type using time division when the number of divisions of time division is six. The control device 14, however, changes the number of divisions of time division according to the observer distance HDa.

When the observer distance HDa is increased more than approximately 750 millimeters to be, for example, approximately 900 millimeters, the control device 14 changes the number of divisions of time division from six to five. When the number of divisions of time division is six, in the super multi-view display according to the present embodiment, an eight-perspective image is presented around the right eye of the observer H and a seven-perspective image around the left eye thereof.

When the observer distance HDa is approximately 900 millimeters, the single-perspective viewing width WVZ is approximately 2.8 millimeters.

When the observer distance HDa is increased more than approximately 900 millimeters to be, for example, approximately 1200 millimeters, the control device 14 changes the number of divisions of time division from five to four. When the number of divisions of time division is four, in the super multi-view display according to the present embodiment, images each for six perspectives are presented around each of the right eye and the left eye of the observer H.

When the observer distance HDa is approximately 1200 millimeters, the single-perspective viewing width WVZ is approximately 3.7 millimeters.

In the image display device 10 according to the present embodiment, the distance (inter-display surface distance DD) between the image display surface (first display unit 11a) and the illumination arrangement surface (second display surface D2a) is a distance based on the viewing angle of the image display surface (first display unit 11a) and the width (pixel width pa) of the illumination arrangement control elements (second subpixels) disposed in the illumination arrangement surface (second display surface D2a).

Owing to the configuration described above, in the image display device 10 according to the present embodiment, the distance (inter-display surface distance DD) between the image display surface (first display unit 11a) and the illumination arrangement surface (second display surface D2a) can be set to a distance according to the observer distance HDa and the viewing width DP when the super multi-view stereoscopic image is displayed, and thus the super multi-view stereoscopic image can be displayed.

In the image display device 10 according to the present embodiment, there are a plurality of types of the illumination arrangement control elements (second subpixels) disposed in the illumination arrangement surface (second display surface D2a), according to a frequency band of the illumination light. There are as many types of the display elements (first subpixels) disposed in the image display surface (first display unit 11a) as the number of the plurality of types according to the frequency band of the illumination light. The order in which the plurality of types of the illumination arrangement control elements (second subpixels) are disposed in the illumination arrangement surface (second display surface D2a) and the order in which the same number of types of the display elements (first subpixels) as the plurality of types are disposed in the image display surface (first display unit 11a) are reverse orders when the back surface of the image display surface (first display unit 11a) is seen from the illumination arrangement surface (second display surface D2a).

Owing to the configuration described above, in the image display device 10 according to the present embodiment, spreading of the light transmitting through the first display surface D1a can be increased as compared to a case in which the image display surface (first display unit 11a) and the illumination arrangement surface (second display surface D2a) are provided to face the same direction as each other, and therefore the number of rays of light to enter the pupil of each of the left eye and the right eye of the observer H can be increased as compared to a case in which the image display surface (first display unit 11a) and the illumination arrangement surface (second display surface D2a) are provided to face the same direction as each other.

Each of the embodiments above has described an example of a case in which each of the number of patterns for the image arrangement patterns and the number of patterns for the barrier patterns is equal to the number of divisions of time division, but this is not restrictive. Each of the number of patterns for the image arrangement patterns and the number of patterns for the barrier patterns may be less than the number of divisions of time division.

For example, when the number of divisions of time division is four, the control device periodically changes the barrier patterns in order of pattern Y1b and pattern Y3b without using pattern Y2b and pattern Y4b, instead of periodically changing the barrier patterns in order of pattern Y1b, pattern Y2b, pattern Y3b, and pattern Y4b. Note that, here, the position of the slit of pattern Y1b is disposed at the position that is shifted to the left by the slit width with respect to the position of the slit of pattern Y2b. The position of the slit of pattern Y2b is disposed at the position that is shifted to the left by the slit width with respect to the position of the slit of pattern Y3b. The position of the slit of pattern Y3b is disposed at the position that is shifted to the left by the slit width with respect to the position of the slit of pattern Y4b.

Regarding the image arrangement patterns, according to the use of pattern Y1b and pattern Y3b as the barrier patterns, the control device periodically changes the barrier patterns in order of pattern X1b and pattern X3b without using pattern X2b and pattern X4b, instead of periodically changing the image arrangement patterns in order of pattern X1b, pattern X2b, pattern X3b, and pattern X4b.

Each of the embodiments above has described an example of a case in which the image display device 10 and the image display device 10a display a stereoscopic image based on the parallax barrier method using time division. In the parallax barrier method using time division, in order to maintain the resolution of the image display surface to be a predetermined resolution or higher, the stereoscopic image to be visually recognized by the right and left eyes of the observer is displayed at a high frame rate.

According to the following examples which are not in the scope of the claimed invention, the image display device may display a stereoscopic image based on the parallax barrier method not using time division. The parallax barrier method not using time division is, in other words, a parallax barrier method using time division with which the value of the number of divisions of time division is one. That is to say, in the parallax barrier method using time division, one may be included as the value of the number of divisions of time division.

When the number of divisions of time division is one, the division number calculation unit calculates one as the value of the updated number of divisions of time division. When the division number calculation unit calculates one as the value of the updated number of divisions of time division, the image display surface control unit does not change the number of divisions of time division of the region of each of the left image region and the right image region out of the image display surface from one. When the division number calculation unit calculates one as the value of the updated number of divisions of time division, the illumination arrangement surface control unit does not change the arrangement pattern of the region of each of the barrier region and the slit region.

When a stereoscopic image is displayed based on the parallax barrier method not using time division, resolution of the stereoscopic image is lower than that of the parallax barrier method with time division being performed.

Even with the parallax barrier method not using time division, when resolution of the image display surface is sufficiently high, the stereoscopic image to be displayed in the image display surface cannot be distinguished by the observer from the stereoscopic image of the case with the parallax barrier method using time division. Thus, when resolution of the image display surface is sufficiently high, even with the parallax barrier method not using time division, the image display device can extend the stereoscopic viewing zone in the depth direction without deteriorating resolution.

Note that a part of the image display device 10 and the image display device 10a, for example, the control unit 140, according to the embodiments described above may be implemented with a computer. In that case, this may be implemented by recording a program for implementing such a control function in a computer-readable recording medium, and causing a computer system to read and execute the program recorded in the recording medium. Note that the "computer system" mentioned herein includes an OS and hardware such as peripheral equipment, which serve as a computer system incorporated in the image display device 10 and the image display device 10a. The "computer-readable recording medium" includes a portable medium such as a flexible disk, a magneto-optical disk, a ROM, and a CD-ROM, and a storage device such as a hard disk incorporated in the computer system. In addition, the "computer-readable recording medium" may include a recording medium that dynamically stores a program for a short period of time, such as a communication line when the program is transmitted via a network such as the Internet and a communication line such as a telephone line, and a recording medium that stores a program for a fixed period of time, such as a volatile memory inside a computer system that serves as a server or a client in the above-mentioned case. Further, the program may be a program for implementing some of the functions described above, or may be a program that can implement the above-described functions in combination with the program that is already recorded in the computer system.

A part or all of the image display device 10 and the image display device 10a according to the embodiments described above may be implemented as an integrated circuit of large-scale integration (LSI) or the like. Each functional block of the image display device 10 and the image display device 10a may be individually implemented as a processor, or a part or all thereof may be integrated and implemented as a processor.

The method for implementation as an integrated circuit is not limited to LSI, and implementation may be achieved with a dedicated circuit or a general-purpose processor. If a technology for implementation as an integrated circuit to replace LSI is developed as a result of improvement of semiconductor technology, an integrated circuit according to the technology may be used.

While embodiments of the present invention have been described above in detail with reference to the drawings, specific configurations are not limited to those described above, and various changes to design or the like may be made within the scope of the present invention.

### Reference Signs List

1, 1a Image display system
10, 10a Image display device
11, 11a First display unit
12, 12a Irradiation unit
13, 13a Diffusion plate
14, 14a Control device
20 Distance detection unit
121, 121a Second display unit
122 Light source unit
D1 First display surface
D2 Second display surface
140 Control unit
141 Reading unit
142 Position information acquisition unit
143 Division number calculation unit
144 Image generation unit
145 First drive control unit
146 Second drive control unit
150 Storage unit
B0 Blue second subpixel
G0 Green second subpixel
R0 Red second subpixel
B1 Blue first subpixel
G1 Green first subpixel
R1 Red first subpixel
H Observer

## Claims

1. An image display device (10) for displaying a stereoscopic image based on a parallax barrier type method using a parallax optic arranged behind an image display surface (D1) of a transmission type first display panel (11) of the image display device (10), the image display device (10) comprising:
a plurality of display elements disposed on the image display surface (D1) in a matrix pattern;
a plurality of illumination arrangement control elements, as the parallax optic, disposed in a matrix pattern on an illumination arrangement surface (D2) of a second display panel (121), wherein the second display panel (121) is configured to variably control an arrangement, with respect to a position of the image display surface (D1), of illumination light radiated by a light source unit (122) in a direction from the second display panel (121) to the image display surface (D1), and wherein the second display panel (121) is disposed between the light source unit (122) and the image display surface (D1); and
a control unit (140) configured to control the plurality of display elements, based on image data for the left eye and image data for the right eye, and control the plurality of illumination arrangement control elements, based on an image to be displayed in the image display surface (D1), and a relative positional relationship between a position of the image display surface (D1) and a position of an observer (H) who observes the image display surface (D1), wherein
the control unit (140) includes
a position information acquisition unit (142) configured to acquire position information indicating an observer distance (HD), which is a distance between at least one eye of both eyes of the observer (H) and the image display surface (D1),
a division number calculation unit (143) configured to calculate an updated number of divisions of time division, based on the observer distance (HD) indicated by the position information acquired by the position information acquisition unit (142), the updated number of divisions of time division being an updated value of a number of divisions of time division which is equal to a number of image arrangement patterns, wherein each of the image arrangement patterns is displayed in one division of the divisions of time division, wherein each of the image arrangement patterns comprises a left image region out of the image display surface (D1) where an image of the image data for the left eye is displayed and a right image region out of the image display surface (D1) where an image of the image data for the right eye is displayed,
an image display surface control unit (145) configured to change the number of divisions of time division, based on the updated number of divisions of time division calculated by the division number calculation unit (143), and
an illumination arrangement surface control unit (146) configured to change an arrangement pattern of a region of each of a barrier region out of the illumination arrangement surface where the illumination light is not generated and a slit region out of the illumination arrangement surface where the illumination light is generated, based on the updated number of divisions of time divisions calculated by the division number calculation unit (143), while maintaining a width of the slit region to be a width before the number of divisions of time divisions is changed.

2. The image display device (10) according to Claim 1, wherein
the division number calculation unit (143) relatively reduces the updated number of divisions of time divisions when the observer distance (HD) is relatively long, and relatively increases the updated number of divisions of time divisions when the observer distance (HD) is relatively short.

3. The image display device (10) according to Claim 1, wherein
a distance between the image display surface (D1) and the illumination arrangement surface (D2) is a distance based on a viewing angle of the image display surface (D1) and a width of an illumination arrangement control element of the plurality of illumination arrangement control elements disposed on the illumination arrangement surface (D2).

4. The image display device (10) according to any one of Claims 1 to 2, wherein
there are a plurality of types of the plurality of illumination arrangement control elements disposed in the illumination arrangement surface (D2), according to a frequency band of the illumination light,
there are as many types of the plurality of display elements disposed in the image display surface (D2) as the number of the plurality of types according to the frequency band of the illumination light, and
the order in which the plurality of types of the plurality of illumination arrangement control elements are disposed in the illumination arrangement surface (D2) and the order in which the same number of types of the plurality of display elements as the plurality of types are disposed in the image display surface (D1) are reverse orders when the back surface of the image display surface (D1) is seen from the illumination arrangement surface (D2).

5. An image display method for an image display device (10), the image display device (10) displaying a stereoscopic image based on a parallax barrier type method using a parallax optic arranged behind an image display surface (D1) of a transmission type first display panel (11) of the image display device (10), the image display device including
a plurality of display elements disposed on the image display surface (D1) in a matrix pattern,
a plurality of illumination arrangement control elements, as the parallax optic, disposed in a matrix pattern on an illumination arrangement surface (D2) of a second display panel (121), wherein the second display panel (121) configured to variably control an arrangement, with respect to a position of the image display surface (D1), of illumination light radiated by a light source unit (122) in a direction from the second display panel (121) to the image display surface (D1) and wherein the second display panel (121) is disposed between the light source unit (122) and the image display surface (D1), and
a control unit (140) configured to control the plurality of display elements, based on image data for the left eye and image data for the right eye, and control the plurality of illumination arrangement control elements, based on an image to be displayed in the image display surface (D1), and a relative positional relationship between a position of the image display surface (D1) and a position of an observer (H) who observes the image display surface (D 1),
the image display method comprising:
acquiring position information indicating an observer distance (HD), which is a distance between at least one eye of both eyes of the observer (H) and the image display surface (D1);
calculating an updated number of divisions of time divisions, based on the observer distance (HD) indicated by the acquired position information, the updated number of divisions being an updated value of a number of divisions of time division which is equal to a number of image arrangement patterns, wherein each of the image arrangement patterns is displayed in one division of the divisions of time division, wherein each of the image arrangement patterns comprises a left image region out of the image display surface (D1) where an image of the image data for the left eye is displayed and a right image region out of the image display surface (D1) where an image of the image data for the right eye is displayed;
changing the number of divisions of time division, based on the updated number of divisions of time divisions calculated; and
changing an arrangement pattern of a region of each of a barrier region out of the illumination arrangement surface where the illumination light is not generated and a slit region out of the illumination arrangement surface where the illumination light is generated, based on the updated number of divisions of time division calculated, while maintaining a width of the slit region to be a width before the number of divisions of time divisions is changed.

## Patentansprüche

1. Eine Bildanzeigevorrichtung (10) zum Anzeigen eines Raumbilds auf der Basis eines Verfahrens vom Parallaxenbarrieretyps unter Verwendung einer Parallaxenoptik, die hinter einer Bildanzeigefläche (D1) eines ersten Anzeigefeldes (11) vom Transmissionstyp der Bildanzeigevorrichtung (10) angeordnet ist, wobei die Bildanzeigevorrichtung (10) folgende Merkmale aufweist:
eine Mehrzahl von Anzeigeelementen, die auf der Bildanzeigeoberfläche (D1) in einem Matrixmuster angeordnet sind;
eine Mehrzahl von Beleuchtungsanordnungssteuerelementen als die Parallaxenoptik, die in einem Matrixmuster auf einer Beleuchtungsanordnungsoberfläche (D2) eines zweiten Anzeigefeldes (121) angeordnet sind, wobei das zweite Anzeigefeld (121) dazu konfiguriert ist, eine Anordnung von Beleuchtungslicht, das von einer Lichtquelleneinheit (122) in einer Richtung von dem zweiten Anzeigefeld (121) zu der Bildanzeigeoberfläche (D1) abgestrahlt wird, in Bezug auf eine Position der Bildanzeigeoberfläche (D1) variabel zu steuern, und wobei das zweite Anzeigefeld (121) zwischen der Lichtquelleneinheit (122) und der Bildanzeigeoberfläche (D1) angeordnet ist; und
eine Steuereinheit (140), die dazu konfiguriert ist, die Mehrzahl von Anzeigeelementen auf der Basis von Bilddaten für das linke Auge und Bilddaten für das rechte Auge zu steuern und die Mehrzahl von Beleuchtungsanordnungssteuerelementen auf der Basis eines Bildes, das in der Bildanzeigeoberfläche (D1) angezeigt werden soll, und einer relativen Positionsbeziehung zwischen einer Position der Bildanzeigeoberfläche (D1) und einer Position eines Betrachters (H), der die Bildanzeigeoberfläche (D1) betrachtet, zu steuern, wobei
die Steuereinheit (140) folgende Merkmale umfasst:
eine Positionsinformationserfassungseinheit (142), die dazu konfiguriert ist, Positionsinformationen zu erfassen, die einen Betrachterabstand (HD) angeben, der ein Abstand zwischen zumindest einem Auge von beiden Augen des Betrachters (H) und der Bildanzeigeoberfläche (D1) ist,
eine Teilungsanzahlberechnungseinheit (143), die dazu konfiguriert ist, eine aktualisierte Anzahl von Teilungen der Zeitteilung auf der Basis des Betrachterabstands (HD) zu berechnen, der durch die Positionsinformationen angegeben wird, die von der Positionsinformationserfassungseinheit (142) erfasst werden, wobei die aktualisierte Anzahl von Teilungen der Zeitteilung ein aktualisierter Wert einer Anzahl von Teilungen der Zeitteilung ist, die gleich einer Anzahl von Bildanordnungsmustern ist, wobei jedes der Bildanordnungsmuster in einer Teilung der Teilungen der Zeitteilung angezeigt wird, wobei jedes der Bildanordnungsmuster eine linke Bildregion außerhalb der Bildanzeigeoberfläche (D1), wo ein Bild der Bilddaten für das linke Auge angezeigt wird, und eine rechte Bildregion außerhalb der Bildanzeigeoberfläche (D1) aufweist, wo ein Bild der Bilddaten für das rechte Auge angezeigt wird,
eine Bildanzeigeoberflächensteuereinheit (145), die dazu konfiguriert ist, die Anzahl von Teilungen der Zeitteilung auf der Basis der aktualisierten Anzahl von Teilungen der Zeitteilung, die von der Teilungsanzahlberechnungseinheit (143) berechnet wird, zu ändern, und
eine Beleuchtungsanordnungsoberflächensteuereinheit (146), die dazu konfiguriert ist, ein Anordnungsmuster einer Region von jeder einer Barriereregion außerhalb der Beleuchtungsanordnungsoberfläche, wo das Beleuchtungslicht nicht erzeugt wird, und einer Schlitzregion außerhalb der Beleuchtungsanordnungsoberfläche, wo das Beleuchtungslicht erzeugt wird, auf der Basis der aktualisierten Anzahl von Teilungen der Zeitteilungen, die von der Teilungsanzahlberechnungseinheit (143) berechnet wird, zu ändern, während eine Breite der Schlitzregion als eine Breite beibehalten wird, bevor die Anzahl von Teilungen der Zeitteilungen geändert wird.

2. Die Bildanzeigevorrichtung (10) gemäß Anspruch 1, wobei
die Teilungsanzahlberechnungseinheit (143) die aktualisierte Anzahl von Teilungen der Zeitteilungen relativ reduziert, wenn der Betrachterabstand (HD) relativ lang ist, und die aktualisierte Anzahl von Teilungen der Zeitteilungen relativ erhöht, wenn der Betrachterabstand (HD) relativ kurz ist.

3. Die Bildanzeigevorrichtung (10) gemäß Anspruch 1, wobei
ein Abstand zwischen der Bildanzeigeoberfläche (D1) und der Beleuchtungsanordnungsoberfläche (D2) ein Abstand ist, der auf einem Betrachtungswinkel der Bildanzeigeoberfläche (D1) und einer Breite eines Beleuchtungsanordnungssteuerelements der Mehrzahl von Beleuchtungsanordnungssteuerelementen basiert, die auf der Beleuchtungsanordnungsoberfläche (D2) angeordnet sind.

4. Die Bildanzeigevorrichtung (10) gemäß einem der Ansprüche 1 bis 2, wobei
es eine Mehrzahl von Typen der Mehrzahl von Beleuchtungsanordnungssteuerelementen gibt, die in der Beleuchtungsanordnungsoberfläche (D2) angeordnet sind, gemäß einem Frequenzband des Beleuchtungslichts,
es ebenso viele Typen der Mehrzahl von Anzeigeelementen gibt, die in der Bildanzeigeoberfläche (D2) angeordnet sind, wie die Anzahl der Mehrzahl von Typen gemäß dem Frequenzband des Beleuchtungslichts, und
die Reihenfolge, in der die Mehrzahl von Typen der Mehrzahl von Beleuchtungsanordnungssteuerelementen in der Beleuchtungsanordnungsoberfläche (D2) angeordnet sind, und die Reihenfolge, in der die gleiche Anzahl von Typen der Mehrzahl von Anzeigeelementen wie die Mehrzahl von Typen in der Bildanzeigeoberfläche (D1) angeordnet sind, umgekehrte Reihenfolgen sind, wenn die hintere Oberfläche der Bildanzeigeoberfläche (D1) von der Beleuchtungsanordnungsoberfläche (D2) aus betrachtet wird.

5. Ein Bildanzeigeverfahren für eine Bildanzeigevorrichtung (10), wobei die Bildanzeigevorrichtung (10) ein Raumbild auf der Basis eines Verfahrens vom Parallaxenbarrieretyp unter Verwendung einer Parallaxenoptik anzeigt, die hinter einer Bildanzeigefläche (D1) eines ersten Anzeigefeldes (11) vom Transmissionstyp der Bildanzeigevorrichtung (10) angeordnet ist, wobei die Bildanzeigevorrichtung folgende Merkmale umfasst:
eine Mehrzahl von Anzeigeelementen, die auf der Bildanzeigeoberfläche (D1) in einem Matrixmuster angeordnet sind,
eine Mehrzahl von Beleuchtungsanordnungssteuerelementen als die Parallaxenoptik, die in einem Matrixmuster auf einer Beleuchtungsanordnungsoberfläche (D2) eines zweiten Anzeigefeldes (121) angeordnet sind, wobei das zweite Anzeigefeld (121) dazu konfiguriert ist, eine Anordnung von Beleuchtungslicht, das von einer Lichtquelleneinheit (122) in einer Richtung von dem zweiten Anzeigefeld (121) zu der Bildanzeigeoberfläche (D1) abgestrahlt wird, in Bezug auf eine Position der Bildanzeigeoberfläche (D1) variabel zu steuern, und wobei das zweite Anzeigefeld (121) zwischen der Lichtquelleneinheit (122) und der Bildanzeigeoberfläche (D1) angeordnet ist, und
eine Steuereinheit (140), die dazu konfiguriert ist, die Mehrzahl von Anzeigeelementen auf der Basis von Bilddaten für das linke Auge und Bilddaten für das rechte Auge zu steuern und die Mehrzahl von Beleuchtungsanordnungssteuerelementen auf der Basis eines Bildes, das in der Bildanzeigeoberfläche (D1) angezeigt werden soll, und einer relativen Positionsbeziehung zwischen einer Position der Bildanzeigeoberfläche (D1) und einer Position eines Betrachters (H), der die Bildanzeigeoberfläche (D1) betrachtet, zu steuern,
wobei das Bildanzeigeverfahren folgende Schritte aufweist:
Erfassen von Positionsinformationen, die einen Betrachterabstand (HD) angeben, der ein Abstand zwischen zumindest einem Auge von beiden Augen des Betrachters (H) und der Bildanzeigeoberfläche (D1) ist;
Berechnen einer aktualisierten Anzahl von Teilungen der Zeitteilungen auf der Basis des Betrachterabstands (HD), der durch die erfassten Positionsinformationen angegeben wird, wobei die aktualisierte Anzahl von Teilungen ein aktualisierter Wert einer Anzahl von Teilungen der Zeitteilung ist, die gleich einer Anzahl von Bildanordnungsmustern ist, wobei jedes der Bildanordnungsmuster in einer Teilung der Teilungen der Zeitteilung angezeigt wird, wobei jedes der Bildanordnungsmuster eine linke Bildregion außerhalb der Bildanzeigeoberfläche (D1), wo ein Bild der Bilddaten für das linke Auge angezeigt wird, und eine rechte Bildregion außerhalb der Bildanzeigeoberfläche (D1) aufweist, wo ein Bild der Bilddaten für das rechte Auge angezeigt wird;
Ändern der Anzahl von Teilungen der Zeitteilung auf der Basis der berechneten aktualisierten Anzahl von Teilungen der Zeitteilungen; und
Ändern eines Anordnungsmusters einer Region von jeder einer Barriereregion außerhalb der Beleuchtungsanordnungsoberfläche, wo das Beleuchtungslicht nicht erzeugt wird, und einer Schlitzregion außerhalb der Beleuchtungsanordnungsoberfläche, wo das Beleuchtungslicht erzeugt wird, auf der Basis der berechneten aktualisierten Anzahl von Teilungen der Zeitteilung, während eine Breite der Schlitzregion als eine Breite beibehalten wird, bevor die Anzahl von Teilungen der Zeitteilungen geändert wird.

## Revendications

1. Dispositif (10) d'affichage d'image destiné à afficher une image stéréoscopique sur la base d'un procédé de type barrière de parallaxe utilisant une optique de parallaxe agencée derrière une surface (D1) d'affichage d'image d'un premier panneau d'affichage (11) de type transmission du dispositif (10) d'affichage d'image, le dispositif (10) d'affichage d'image comprenant :
une pluralité d'éléments d'affichage disposés sur la surface (D1) d'affichage d'image dans un motif matriciel ;
une pluralité d'éléments de commande d'agencement d'éclairage, en tant qu'optique de parallaxe, disposés dans un motif matriciel sur une surface (D2) d'agencement d'éclairage d'un deuxième panneau d'affichage (121), dans lequel le deuxième panneau d'affichage (121) est configuré pour commander de manière variable un agencement, par rapport à une position de la surface (D1) d'affichage d'image, de lumière d'éclairage émise par une unité source de lumière (122) dans une direction allant du deuxième panneau d'affichage (121) vers la surface (D1) d'affichage d'image, et dans lequel le deuxième panneau d'affichage (121) est disposé entre l'unité source de lumière (122) et la surface (D1) d'affichage d'image ; et
une unité de commande (140) configurée pour commander la pluralité d'éléments d'affichage, sur la base de données d'image pour l'oeil gauche et de données d'image pour l'œil droit, et commander la pluralité d'éléments de commande d'agencement d'éclairage, sur la base d'une image à afficher dans la surface (D1) d'affichage d'image, et d'une relation positionnelle relative entre une position de la surface (D1) d'affichage d'image et une position d'un observateur (H) qui observe la surface (D1) d'affichage d'image, dans lequel
l'unité de commande (140) inclut
une unité (142) d'acquisition d'informations de position configurée pour acquérir des informations de position indiquant une distance observateur (HD), qui est une distance entre au moins un oeil parmi les deux yeux de l'observateur (H) et la surface (D1) d'affichage d'image,
une unité (143) de calcul de nombre de divisions configurée pour calculer un nombre de divisions mis à jour de division temporelle, sur la base de la distance observateur (HD) indiquée par les informations de position acquises par l'unité (142) d'acquisition d'informations de position, le nombre de divisions mis à jour de division temporelle étant une valeur mise à jour d'un nombre de divisions de division temporelle qui est égal à un nombre de motifs d'agencement d'image, dans lequel chacun des motifs d'agencement d'image est affiché dans une division des divisions de division temporelle, dans lequel chacun des motifs d'agencement d'image comprend une région d'image gauche de la surface (D1) d'affichage d'image où une image des données d'image pour l'œil gauche est affichée et une région d'image droite de la surface (D1) d'affichage d'image où une image des données d'image pour l'œil droit est affichée,
une unité (145) de commande de surface d'affichage d'image configurée pour changer le nombre de divisions de division temporelle, sur la base du nombre de divisions mis à jour de division temporelle calculé par l'unité (143) de calcul de nombre de divisions, et
une unité (146) de commande de surface d'agencement d'éclairage configurée pour changer un motif d'agencement d'une région de chacune d'une région barrière de la surface d'agencement d'éclairage où la lumière d'éclairage n'est pas générée et d'une région fente de la surface d'agencement d'éclairage où la lumière d'éclairage est générée, sur la base du nombre de divisions mis à jour de divisions temporelles calculé par l'unité (143) de calcul de nombre de divisions, tout en maintenant une largeur de la région fente pour qu'elle corresponde à une largeur avant le changement du nombre de divisions de divisions temporelles.

2. Dispositif (10) d'affichage d'image selon la revendication 1, dans lequel
l'unité (143) de calcul de nombre de divisions réduit relativement le nombre de divisions mis à jour de divisions temporelles lorsque la distance observateur (HD) est relativement longue, et augmente relativement le nombre de divisions mis à jour de divisions temporelles lorsque la distance observateur (HD) est relativement courte.

3. Dispositif (10) d'affichage d'image selon la revendication 1, dans lequel
une distance entre la surface (D1) d'affichage d'image et la surface (D2) d'agencement d'éclairage est une distance basée sur un angle de vision de la surface (D1) d'affichage d'image et une largeur d'un élément de commande d'agencement d'éclairage de la pluralité d'éléments de commande d'agencement d'éclairage disposés sur la surface (D2) d'agencement d'éclairage.

4. Dispositif (10) d'affichage d'image selon l'une quelconque des revendications 1 à 2, dans lequel
il y a une pluralité de types de la pluralité d'éléments de commande d'agencement d'éclairage disposés dans la surface (D2) d'agencement d'éclairage, en fonction d'une bande de fréquences de la lumière d'éclairage,
il y a autant de types de la pluralité d'éléments d'affichage disposés dans la surface (D2) d'affichage d'image que le nombre de la pluralité de types en fonction d'une bande de fréquences de la lumière d'éclairage, et
l'ordre dans lequel la pluralité de types de la pluralité d'éléments de commande d'agencement d'éclairage sont disposés dans la surface (D2) d'agencement d'éclairage et l'ordre dans lequel le même nombre de types de la pluralité d'éléments d'affichage que la pluralité de types sont disposés dans la surface (D1) d'affichage d'image sont des ordres inverses lorsque la surface arrière de la surface (D1) d'affichage d'image est vue depuis la surface (D2) d'agencement d'éclairage.

5. Procédé d'affichage d'image pour un dispositif (10) d'affichage d'image, le dispositif (10) d'affichage d'image affichant une image stéréoscopique sur la base d'un procédé de type barrière de parallaxe utilisant une optique de parallaxe agencée derrière une surface (D1) d'affichage d'image d'un premier panneau d'affichage (11) de type transmission du dispositif (10) d'affichage d'image, le dispositif d'affichage d'image incluant
une pluralité d'éléments d'affichage disposés sur la surface (D1) d'affichage d'image dans un motif matriciel,
une pluralité d'éléments de commande d'agencement d'éclairage, en tant qu'optique de parallaxe, disposés dans un motif matriciel sur une surface (D2) d'agencement d'éclairage d'un deuxième panneau d'affichage (121), dans lequel le deuxième panneau d'affichage (121) est configuré pour commander de manière variable un agencement, par rapport à une position de la surface (D1) d'affichage d'image, de lumière d'éclairage émise par une unité source de lumière (122) dans une direction allant du deuxième panneau d'affichage (121) vers la surface (D1) d'affichage d'image et dans lequel le deuxième panneau d'affichage (121) est disposé entre l'unité source de lumière (122) et la surface (D1) d'affichage d'image, et
une unité de commande (140) configurée pour commander la pluralité d'éléments d'affichage, sur la base de données d'image pour l'œil gauche et de données d'image pour l'œil droit, et commander la pluralité d'éléments de commande d'agencement d'éclairage, sur la base d'une image à afficher dans la surface (D1) d'affichage d'image, et d'une relation positionnelle relative entre une position de la surface (D1) d'affichage d'image et une position d'un observateur (H) qui observe la surface (D1) d'affichage d'image,
le procédé d'affichage d'image comprenant :
l'acquisition d'informations de position indiquant une distance observateur (HD), qui est une distance entre au moins un oeil parmi les deux yeux de l'observateur (H) et la surface (D1) d'affichage d'image ;
le calcul d'un nombre de divisions mis à jour de divisions temporelles, sur la base de la distance observateur (HD) indiquée par les informations de position acquises, le nombre de divisions mis à jour étant une valeur mise à jour d'un nombre de divisions de division temporelle qui est égal à un nombre de motifs d'agencement d'image, dans lequel chacun des motifs d'agencement d'image est affiché dans une division des divisions de division temporelle, dans lequel chacun des motifs d'agencement d'image comprend une région d'image gauche de la surface (D1) d'affichage d'image où une image des données d'image pour l'œil gauche est affichée et une région d'image droite de la surface (D1) d'affichage d'image où une image des données d'image pour l'œil droit est affichée ;
le changement du nombre de divisions de division temporelle, sur la base du nombre de divisions mis à jour de divisions temporelles calculé ; et
le changement d'un motif d'agencement d'une région de chacune d'une région barrière de la surface d'agencement d'éclairage où la lumière d'éclairage n'est pas générée et d'une région fente de la surface d'agencement d'éclairage où la lumière d'éclairage est générée, sur la base du nombre de divisions mis à jour de division temporelle calculé, tout en maintenant une largeur de la région fente pour qu'elle corresponde à une largeur avant le changement du nombre de divisions de divisions temporelles.
